# EUROPÄISCHE PATENTSCHRIFT

(11) **EP 3 965 973 B1**
(45) Veröffentlichungstag und Bekanntmachung des Hinweises auf die Patenterteilung: **01.11.2023**
(21) Anmeldenummer: 20726005.0
(22) Anmeldetag: 07.05.2020
(51) Int. Cl.: B21C 51/00, B21F 3/00, B21F 11/00, B21F 35/00, H01R 43/28, H02G 1/12, B21D 7/16, G01N 21/952

(54) **UMFORMMASCHINE UND HERSTELLVERFAHREN FÜR BIEGETEILE AUS ISOLIERTEM LÄNGLICHEM MATERIAL MIT ABISOLIERTEN ENDEN**
FORMING MACHINE AND METHOD FOR PRODUCING BENT PARTS FROM AN INSULATED ELONGATE MATERIAL HAVING STRIPPED ENDS
MACHINE DE FORMAGE ET PROCÉDÉ DE PRODUCTION DE PIÈCES CINTRÉES À PARTIR D'UN MATÉRIAU ALLONGÉ ISOLÉ DOTÉ D'EXTRÉMITÉS DÉNUDÉES

(30) Priorität: 08.05.2019 DE 102019111940
(43) Veröffentlichungstag der Anmeldung: 16.03.2022
(73) Patentinhaber: WAFIOS Aktiengesellschaft, 72764 Reutlingen (DE)
(72) Erfinder: KALKAU, Volker, 72805 Lichtenstein (DE)
(74) Vertreter: Patentanwälte Geyer, Fehners & Partner mbB
(86) Internationale Anmeldenummer: PCT/EP2020/062727
(87) Internationale Veröffentlichungsnummer: WO 2020/225369

(56) Entgegenhaltungen:
- EP-A1- 0 533 422
- WO-A1-98/48243
- WO-A1-2018/134115
- DE-A1- 2 713 147
- DE-A1- 10 244 819
- JP-A- S60 174 962
- US-B1- 7 480 987

## Beschreibung

Die Erfindung bezieht sich auf eine Umformmaschine zum Herstellen von Biegeteilen aus isoliertem länglichem Material in Form von Draht- oder Flach-Material, bei dem ein elektrisch leitendes Metall mit einer elektrisch isolierenden Isolationsschicht ummantelt ist, wobei die Umformmaschine aufweist: eine Einzugseinrichtung zum Zuführen des isolierten Materiales in einer Einzugsrichtung, eine Biegestation mit einem Biegewerkzeug zum Umformen des Materials zu einem Biegeteil, eine der Biegestation in Einzugsrichtung vorgeordnete Abisoliereinrichtung zum Abisolieren von Abschnitten des isolierten Materials, eine zwischen Abisoliereinrichtung und Biegestation angeordnete Schneideinrichtung zum Durchtrennen des länglichen Materials in den abisolierten Abschnitten und Abtrennen des Biegeteiles vom zugeführten Material, wobei die Schneideinrichtung ein Schneidmesser und eine Führungseinrichtung aufweist, welche das längliche Material quer zur Einzugsrichtung stabilisiert, wenn das Schneidmesser den abisolierten Abschnitt durchtrennt, und eine Messeinrichtung zur Ermittlung der Lage der abisolierten Abschnitte des länglichen Materials, sowie eine mit der Messeinrichtung verbundene Steuereinrichtung.

Die Erfindung bezieht sich weiter auf ein Herstellverfahren für Biegeteilen aus isoliertem länglichem Material in Form von Draht- oder Flach-Material, bei dem ein elektrisch leitendes Metall mit einer elektrisch isolierenden Isolationsschicht ummantelt ist, umfassend die Schritte: Zuführen des isolierten Materiales in einer Einzugsrichtung, Umformen des Materials zu einem Biegeteil mit einem Biegewerkzeug in einer Biegestation, Abisolieren von Abschnitten des isolierten Materials mit einer der Biegestation in Einzugsrichtung vorgeordneten Abisoliereinrichtung, Durchtrennen des länglichen Materials in den abisolierten Abschnitten und Abtrennen des Biegeteiles vom zugeführten Material mit einer zwischen Abisoliereinrichtung und Biegestation angeordneten Schneideinrichtung, wobei die Schneideinrichtung ein Schneidmesser und eine Führungseinrichtung aufweist, welche das längliche Material quer zur Einzugsrichtung stabilisiert, wenn das Schneidmesser den abisolierten Abschnitt durchtrennt, und Ermitteln der Lage der abisolierten Abschnitte des länglichen Materials.

Aus der EP 0 473 036 A2 ist eine Drahtbiegemaschine für mit einer elektrischen Isolierung versehenem Draht aus Vollmaterial bekannt, die eine Drahtzuführstation, eine Biegestation mit Biegewerkzeug, mittels welcher der Draht z.B. zu einer Spule umgebogen wird, wenigstens eine Abisolierstation und eine Schneideinrichtung zum Abtrennen des Biegeteiles vom zugeführten isolierten Draht umfasst. Diese bekannte Drahtbiegemaschine wird elektronisch mittels einer Programmsteuerung angesteuert.

Schließlich wird in der DE 10 2017 200 745 A1 eine Umformmaschine der eingangs genannten Art und ein Verfahren zur Herstellung eines Biegeteils aus isoliertem Flachmaterial beschrieben, wobei letzteres ein flaches elektrisch leitendes Trägermaterial aufweist, das von einer elektrisch isolierenden Isolationsschicht umhüllt ist. Das isolierte Flachmaterial wird, abschnittsweise abisoliert, der Umformmaschine zugeführt und in dieser zu einem zwei- oder dreidimensional gebogenen Biegeteil umgeformt. Sodann wird das Biegeteil von dem zugeführten isolierten Material in einer Schnittoperation abgetrennt. Bei dieser Maschine wird die Abisolier-Operation vor dem Abtrennen des Biegeteils von dem zugeführten Material im Durchlaufverfahren durchgeführt und die Schnittoperation erfolgt in dem abisolierten Abschnitt, der direkt vor dem Biegeteil liegt. Als Messeinrichtung zum Überprüfen der Abisolierung wird in der gattungsgemäßen CNC-Schenkelfeder Wickelmaschine FTU 2.5 mit Abisoliereinrichtung FSA 2.5 der WAFIOS Aktiengesellschaft, die analog zu DE 10 2017 200 745 A1 aufgebaut ist, eine Messzange verwendet. Das längliche Material läuft durch die Messzange durch und wird mittels Kontakten abgefühlt, so dass erkannt werden kann, ob am durchlaufenden Abschnitt die Isolierung vorhanden ist oder nicht, d.h. ob ein abisolierter Abschnitt vorliegt.

Weiter wäre es denkbar, den abisolierten Abschnitt mit einer Kamera zu erfassen. Es zeigte sich jedoch, dass in einem industriellen Produktionsumfeld Streu- und Störlichteinflüsse eine Abbildung des Drahtes per Kamera so stören, dass eine zuverlässige Erkennung abisolierter Abschnitte nicht gegeben ist. Es hat sich deshalb das Prinzip der genannten Messzange etabliert.

Die DE 10 2016 122 728 A1 befasst sich damit, das Ende eines Koaxialkabels mit einem Bildverarbeitungssystem so zu erfassen, dass die Lage des ruhenden Endes für eine Kabelkonfektioniereinrichtung, z.B. durch einen Crimp-Prozess, hinreichend genau bestimmt wird. Dabei wird das Koaxialkabelende bezogen auf eine Kamera von hinten oder im Auflicht beleuchtet.

Die DE 102 44 819 A1 befasst sich mit der Detektion einer fluoreszierenden Substanz auf einer technischen Oberfläche. Dazu wird die Oberfläche in einem Anregungsspektralbereich beleuchtet und in einem anderen, längerwelligen Fluoreszenzspektralbereich abgebildet, um zu detektieren, ob die fluoreszierende Substanz vorhanden ist. Die Anregung erfolgt mit einer Beleuchtungslinie und unter einem Winkel zur Abbildung, um eine Schichtdickenmessung vorzunehmen.

Die abisolierten Abschnitte des länglichen Materials müssen in definierten Bereichen an den Enden des Biegeteils liegen. Bei einem als Spule ausgebildeten Biegeteil werden beispielsweise so die Anschlussenden bereitgestellt. Es ist deshalb erforderlich, dass die Durchtrennung der abisolierten Abschnitte so erfolgt, dass die am Biegeteil verbleibenden Enden der Abschnitte eine bestimmte Länge haben. Die genaue Lage und Ausdehnung des abisolierten Abschnittes ist damit für die Herstellung des Biegeteils von Bedeutung. Stimmen Länge und Lage nicht, muss ein Biegeteil verworfen werden; es entsteht Ausschuss. Hier besteht Verbesserungsbedarf, da die bekannten Messzangen in Genauigkeit und Messgeschwindigkeit begrenzt sind.

Der Erfindung liegt deshalb die Aufgabe zugrunde, bei einer Umformmaschine der eingangs genannten Art die Ausschussquote zu reduzieren.

Die Erfindung ist in den Ansprüchen 1 und 8 definiert. Die Ansprüche 2 bis 7 und 9 bis 14 definieren bevorzugte Weiterbildungen.

Die Umformmaschine ist zum Herstellen von Biegeteilen aus isoliertem länglichem Material in Form von Draht- oder Flach-Material ausgebildet. In diesem Material ist ein elektrisch leitendes Metall mit einer elektrisch isolierenden Insolationsschicht ummantelt. Die Biegeteile sollen mit mit abisolierten Enden versehen sein. Die Umformmaschine weist eine Einzugseinrichtung zum Zuführen des isolierten Materials längs einer Einzugsrichtung auf. Am Ende der Umformmaschine sitzt eine Biegestation mit einem Biegewerkzeug zum Umformen des Materials zu einem Biegeteil. Je nach Biegewerkzeug übernimmt dieses den Einzug ganz oder wirkt dabei mit. Dann ist die Einzugseinrichtung ganz oder teilweise durch das Biegewerkzeug realisiert. Das Biegewerkzeug ist in Ausführungsformen ein Wickler umfassend einen oder mehrere Formgeber und Drahtzieher. Der Biegestation in Einzugsrichtung vorgeordnet ist eine Abisoliereinrichtung zum Abisolieren von Abschnitten des Isoliermaterials. Die Abisoliereinrichtung arbeitet im Durchlaufverfahren. Zwischen der Abisoliereinrichtung und der Biegestation ist eine Schneideinrichtung angeordnet. Diese dient dazu, das längliche Material in den isolierten Abschnitten zu durchtrennen. Mit jeder Durchtrennung wird das zuletzt geformte Biegeteil vom verbleibenden länglichen Material abgetrennt. Die Schneideinrichtung ist damit auch zum Abtrennen des Biegeteils vom restlichen, zugeführten Material ausgebildet. Sie weist ein Schneidmesser und eine Führungseinrichtung auf. Die Führungseinrichtung stabilisiert das längliche Material quer zur Einzugsrichtung, wenn das Schneidmesser das Material im abisolierten Abschnitt durchtrennt. Bevorzugt ruht das längliche Material beim Durchtrennen. Die Einzugseinrichtung arbeitet dann intermittierend.

Zum Erkennen der Lage der abisolierten Abschnitte des länglichen Materials ist eine Messeinrichtung vorgesehen. Weiter ist eine Steuereinrichtung mit der Messeinrichtung verbunden und zur Steuerung des Herstellens der Biegeteile ausgebildet. Dies umfasst insbesondere die Steuerung des Einzugs und der Biegestation. Je nach Umformprozess bzw. Form des Biegeteils kann der Einzug dabei intermittierend erfolgen, insbesondere dann, wenn ein Ende des länglichen Materials in das Biegewerkzeug eingelegt werden muss, dieses dann unter Einzug des Materials das Biegeteil formt und nach Abschluss dieses Formungsvorgangs die Schneideinrichtung den nächsten abisolierten Abschnitt durchtrennt, um das Biegeteil abzutrennen.

Die Messeinrichtung ist als Kombination aus bevorzugt monochromer Kamera und Beleuchtungseinrichtung vorgesehen. Die Kamera blickt rechtwinklig auf das längliche Material, hat ihre Blickachse also rechtwinklig zur Einzugsrichtung angeordnet. Die Beleuchtungseinrichtung liegt hingegen schräg dazu, also schräg sowohl zur Einzugseinrichtung als auch zur optischen Blickachse. Sie beleuchtet das längliche Material im von der Kamera erfassten Blickfeld. Besonders bevorzugt liegen Blickachse und Beleuchtungsachse sowie Einzugsrichtung in einer Ebene, da dann besonders gute Reflexionsunterschiede zwischen abisoliertem, also blankem Material und isoliertem, also umhüllten Material. Durch die gewählte Geometrie werden für das Kamerabild die Reflexionseigenschaften des länglichen Materials relevant, so dass die Kamera und/oder die Steuereinrichtung die abisolierten Abschnitte am länglichen Material anhand der Reflexionseigenschaften detektiert. Diese Detektion kann auf Kameraebene durchgeführt werden, wenn diese bereits eine entsprechende Bildverarbeitung ausführt. Sie kann alternativ oder ergänzend auch durch die Steuereinrichtung durchgeführt werden, welche die mehr oder weniger vorverarbeiteten Signale der monochromen Kamera erhält.

Die Messeinrichtung erlaubt eine sehr viel genauere Bestimmung von Lage und Länge der abisolierten Abschnitte. Sie ist gegenüber Streulicht überraschend unempfindlich, da die Detektion anhand der Reflexionseigenschaften erfolgt. Diese werden durch die vorgeschriebene geometrische Anordnung von Blickachse und Beleuchtungsachse für die Detektion der abisolierten Abschnitte genutzt. Überraschenderweise hat sich hierbei die Verwendung einer monochromen Kamera als besonders vorteilhaft herausgestellt. Bei einer solchen Kamera sind die Reflexionseigenschaften prägnant und zugleich besonders einfach zu ermitteln.

Ein weiterer Vorteil der in der Umformmaschine vorgesehenen Messeinrichtung besteht darin, dass nun eine Erfassung unmittelbar an der Führungseinrichtung, d. h. im Bereich der Schneideinrichtung erfolgen kann. Mit der herkömmlichen Messzange war dies nicht möglich. Die Messeinrichtung erlaubt es mit besonderem Vorteil, den aus der Führungseinrichtung ragenden Bereich des länglichen Materials und insbesondere die Länge eines abisolierten Abschnitts oder Teil davon zu erfassen. Da der Steuereinrichtung durch die Ansteuerung bzw. dort hinterlegte Wirkungsweise der Abisoliereinrichtung die Länge der abisolierten Abschnitte bekannt ist, ermöglicht die Messeinrichtung es, den Einzug des länglichen Materials so zu steuern, dass der beim Durchtrennen am länglichen Material verbleibende Teil des durchtrennten abisolierten Abschnittes eine vorbestimmte Länge hat. Dies gilt natürlich gleichermaßen auch für den restlichen Teil des abisolierten Abschnittes, der am Biegeteil das Anschlussterminal bildet. Die Messeinrichtung erfasst dadurch indirekt oder direkt exakt denjenigen Teil des Biegeteils, der hinsichtlich der Abisolierung für die Qualität von großer Bedeutung ist. Dies mindert zusätzlich zur höheren Messgenauigkeit, die von der Messeinrichtung erreicht wird, die Ausschussquote.

Die Messeinrichtung hat darüber hinaus den Vorteil, dass etwaige Fehlerfortpflanzungen bzw. Latenzen bei der Einstellung der Stelle, an der die Schneidvorrichtung die abisolierten Abschnitte durchtrennt, vermieden bzw. minimiert sind. Dies steht im Gegensatz zur herkömmlichen Methode, bei der eine Messzange in großem Abstand von der Schneidvorrichtung die abisolierten Abschnitte erfasste. Eine Korrektur konnte sich dann erst auswirken, wenn der von der Messzange erfasste Abschnitt bis zur Schneideinrichtung, d.h. bis unmittelbar vor dem Biegewerkzeug durchgelaufen war. Dadurch konnten mehrere Ausschussstücke unvermeidbar werden. Da die Messeinrichtung nun unmittelbar an der Schneideinrichtung messen kann, ist diese Problematik vermieden, was die Ausschussquote nochmals reduziert.

Auf Basis der Messeinrichtung ist es darüber hinaus möglich, die vorbestimmte Länge des am länglichen Material verbleibenden Teils des durchtrennten abisolierten Abschnittes (und damit im Gegenzug auch die Länge des restlichen Teils, der am Biegeteil vorhanden ist) durch eine Regelung einzustellen. Dazu reversiert die Steuereinrichtung ggf. den Einzug des länglichen Materials. Dies kann geschehen, indem eine Einzugseinrichtung entsprechend angesteuert wird. Alternativ oder zusätzlich kann ein einziehendes Biegewerkzeug, z.B. ein Wickler, reversiert werden, soweit er reservierbar ausgebildet ist.

Besonders bevorzugt ist es, mit der Messvorrichtung den Teil des länglichen Materials zu erfassen, der am biegewerkzeugseitigen Ende aus der Führungseinrichtung ragt. Es handelt sich dann um denjenigen Bereich des länglichen Materials, in dem die Schneidvorrichtung den letzten, vor dem Biegeteil liegenden, abisolierten Abschnitt durchtrennt. Gleichermaßen ist es aber auch möglich, am anderen Ende, also am einlaufseitigen Ende der Führungseinrichtung die Lage des abisolierten Abschnittes zu erfassen, da die Teilung, d.h. der Abstand der abisolierten Abschnitte der Steuereinrichtung bekannt ist.

Besonders bevorzugt ist eine Ausgestaltung, bei der die Abisoliereinrichtung motorisch hinsichtlich ihrer Lage längs der Einzugsrichtung verfahr- und einstellbar ist. Die Steuereinrichtung regelt dann mittels Einstellung der Lage der Abisoliereinrichtung die Position am länglichen Material, an der die Schneideinrichtung die abisolierten Abschnitte durchtrennt. In Kombination mit der Reversierung des Einzugs lässt sich dann auch eine zweistufige Regelung ausführen, in der die Steuerung des Einzugs und die Einstellung der Grundposition der Abisoliereinrichtung eingesetzt werden.

Ganz besonders bevorzugt misst die Kamera aber an einem Ort vor der Schneideinrichtung, an dem ein abisolierte Abschnitt zur Gänze im Sichtfeld der Kamera liegt, und die Steuereinrichtung stellt den intermittierenden Einzug so ein, dass das Schneidmesser den letzten abisolierten Abschnitt an dessen vorbestimmter Stelle durchtrennt.

In Ausführungsformen erfasst die Messeinrichtung, d.h. die Kamera, den Draht in dessen Bewegung, also ohne dass dieser angehalten wird. Dies wird als fliegendes Messen bezeichnet.

In Ausführungsformen erfasst die Messeinrichtung, d.h. die Kamera, den Draht bevor er in die Führungseinrichtung, d.h. die Schneideinrichtung eintritt. Dies kann auch bei einem kontinuierlichen Einzug des Drahtes erfolgen.

In Weiterbildungen ist es möglich, eine Kamera zu verwenden, die vom länglichen Material eine Länge erfasst, die kleiner ist als eine Soll-Länge jedes abisolierten Abschnitts. Dazu wird das Signal der Kamera auf Übergänge erster Art, nämlich von isoliertem zu abisoliertem Material, und auf Übergänge zweiter Art, nämlich von abisoliertem zu isoliertem Material, überwacht. Aus der Detektion dieser Übergänge ergibt sich, ob die abisolierten Abschnitte die korrekte Länge und/oder den korrekten Abstand voneinander haben. Bevorzugt ist in einer Weiterbildung vorgesehen, dass die Steuereinrichtung dazu die Einzugsbewegung der Einzugseinrichtung erfasst oder steuernd vorgibt und diese berücksichtigt, um die Länge der abisolierten Abschnitte und/oder deren Abstand voneinander zu ermitteln. Dabei ist es nicht zwingend erforderlich, eine absolute Länge der abisolierten Abschnitte bzw. einen absoluten Abstand aufeinander folgender abisolierter Abschnitte zu bestimmen. Es kann zur Steuerung durchaus genügen, lediglich Abweichungen von Soll-Positionen bzw. -werten festzustellen.

Die Anordnung der Messeinrichtung in einem Bereich, bevor das längliche Material in die Führungseinrichtung einläuft, realisiert insbesondere das fliegende Messen.

Das fliegende Messen ist besonders einfach, wenn die Steuereinrichtung das Kamerabild zu Triggerzeitpunkten aufnimmt, die so gewählt sind, dass aus den Kamerabildern die Lage des genannten Übergangs erster Art, d.h. von isoliertem zu abisoliertem Material, und die Lage des Übergangs zweiter Art, nämlich von abisoliertem zu isoliertem Material, ermittelt. Aus den Lagen der Übergänge im Kamerabild wird dann die Länge der abisolierten Abschnitte und/oder die Abstände aufeinanderfolgender abisolierter Abschnitte ermittelt. Bevorzugt wird dazu auch der zeitliche Abstand der Triggerzeitpunkte berücksichtigt, da sich dann sehr einfach eine absolute Längenmessung ergibt. Ohne Berücksichtigung der Triggerzeitpunkte erhält man eine Länge in Form von Abweichungen von Soll-Werten.

Um möglichst einfache Kameras verwenden zu können, umfasst die Kamera zwei Kamerasubmodule, die längs der Einzugsrichtung in einem Abstand zueinander angeordnet sind und jeweils mit individuellen Bildfeldern an verschiedenen Stellen auf das längliche Material gerichtet sind. Bevorzugt erfassen die individuellen Bildfelder von länglichem Material einen Abschnitt, der kürzer ist als eine Soll-Ausdehnung des abisolierten Abschnitts. Durch dieses optionale Merkmal kann besonders bevorzugt realisiert werden, dass das Verhältnis zwischen Ausdehnung des Bildfelds (am Draht) und Drahtdurchmesser nicht über 15:1, besonders bevorzugt nicht über 10:1 liegt. Hierdurch wird eine präzise Erfassung der Übergänge gefördert.

Es wird mit den Kamerasubmodulen auf die Übergänge erster Art und zweiter Art geachtet, wobei die Kamerasubmodule zu unterschiedlichen Triggerzeitpunkten ausgelesen werden. Die Triggerzeitpunkte sind so gewählt, dass beim Einzug des länglichen Materials ein Übergang erster Art im Bildfeld einer der Kamerasubmodule liegt, der Übergang zweiter Art desselben abisolierten Abschnitts im Bildfeld des zweiten Kamerasubmoduls - nicht notwendigerweise gleichzeitig, sondern zum nächsten Triggerzeitpunkt. Auf diese Weise werden die Längen der abisolierten Abschnitte und/oder die Abstände aufeinanderfolgender abisolierter Abschnitte ermittelt. Berücksichtigt man den zeitlichen Abstand der Triggerzeitpunkte und/oder den Abstand der Kamerasubmodule, lassen sich die Längen und/oder die Abstände als absolute Größen ermitteln. Andernfalls werden die Längen in Form von Abweichungen von Soll-Werten erhalten.

Soweit in dieser Beschreibung die Längen abisolierter Abschnitte und die Abstände aufeinanderfolgender abisolierter Abschnitte oder die Periode, mit der abisolierte Abschnitte aufeinanderfolgen, angesprochen werden, ist damit nicht zwingend ein absolutes Längenmaß gemeint. Vielmehr kann die Länge auch als relative Länge oder als Abweichung von Soll-Werten ermittelt oder angegeben werden. Dies kann zur Regelung der Umformmaschine bzw. des Umformverfahrens völlig genügen.

Analog zur bislang geschilderten Umformmaschine ist ein entsprechendes Herstellverfahren für Biegeteile aus isoliertem länglichen Material mit abisolierten Enden vorgesehen. Die vorstehende und nachfolgende Beschreibung der Umformmaschine gilt gleichermaßen für das Herstellverfahren und umgekehrt.

Bei der erfindungsgemäßen Umformmaschine kann es sich um jede Art von Drahtumformmaschine (wie Federmaschine, Biegemaschine o. a.) oder um eine Spulenwickelmaschine handeln, bei denen mit einer Isolationsschicht versehenes Material jeweils abschnittweise abisoliert werden soll.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert.

In den Figuren zeigen:
- Fig. 1: eine Schemadarstellung einer Umformmaschine zum Erzeugen von Biegeteilen aus länglichem Material, hier einem isolierten Draht,
- Fig. 2: eine Teilansicht von Elementen der Umformmaschine der Fig. 2,
- Fig. 3: eine Schemadarstellung zur Erläuterung von Abisolierung des isolierten Drahtes und Abtrennen eines daraus geformten Biegeteils in Form einer Spule,
- Fig. 4: eine Schemadarstellung der Umformmaschine der Fig. 1 in detaillierterer Darstellung,
- Fig. 5: eine Schenkelfederwickelmaschine, die Teil der Umformmaschine der Fig. 4 ist,
- Fig. 6-8: vergrößerte Ausschnitte der Schenkelfederwickelmaschine der Fig. 5,
- Fig. 9: eine Schemadarstellung einer Kamera einer Umformmaschine und einem unter der Kamera bewegten, abschnittsweise abisolierten Draht und
- Fig. 10: eine Ausgestaltung ähnlich der Fig. 9, allerdings unter Verwendung einer Kamera mit zwei Kamerasubmodulen.

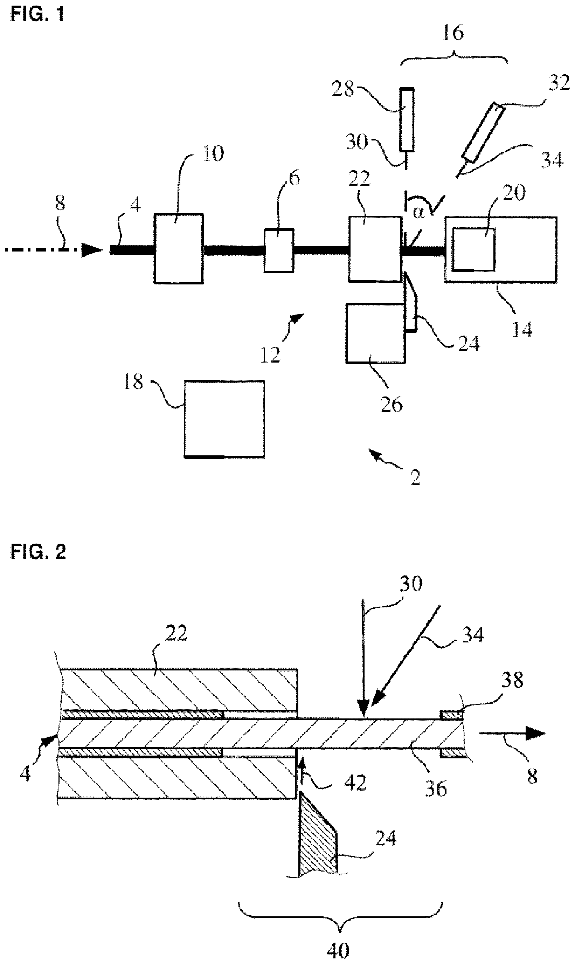

Fig. 1 zeigt schematisch eine Umformmaschine 2 zum Herstellen von Biegeteilen aus länglichem isoliertem Material, das aus Metall mit einer elektrisch isolierenden Isolationsschicht gebildet ist. Im Ausführungsbespiel ist dieses isolierte längliche Material ein isolierter Draht 4. Diese Ausgestaltung des länglichen Materials ist jedoch rein exemplarisch; gleichermaßen kann es sich beispielsweise auch um längliches Flachmaterial handeln. Der Draht 4 wird durch die Umformmaschine gefördert, indem eine Einzugseinrichtung 6 den Draht 4 längs einer Einzugsrichtung 8 durch die Maschine 2 transportiert. Während des Durchlaufs durch eine Abisoliereinrichtung 10 entfernt diese die isolierende Ummantelung abschnittsweise vom Draht 4. Auf die Bedeutung sowie die Lage dieser abisolierten Abschnitte des Drahtes 4 wird nachher noch eingegangen werden.

Eine Biegemaschine 12, zu der in Ausführungsformen auch die bereits erwähnte Einzugseinrichtung 6 zählt, erzeugt aus dem Draht mittels einer Biegestation 14 Biegeteile, hier exemplarisch Spulen. Dazu wird der Draht in die Biegestation 14 für den dort ausgeführten Biegeprozess längs der Einzugsrichtung 8 eingeschoben. Die Biegemaschine umfasst weiter eine Schneideinrichtung 12, welche das zuletzt von der Biegestation 14 gebogene Biegeteil vom restlichen, noch längs der Einzugsrichtung 8 erstreckten Draht abtrennt. Der Ort am Draht, an dem die Schneideinrichtung 12 den Draht 4 durchtrennt, wird mittels einer Messeinrichtung 16 erfasst.

Eine Steuereinrichtung 18, die mit den relevanten Komponenten, beispielsweise Einzugseinrichtung 6, Abisoliereinrichtung 10, Biegestation 14, Schneideinrichtung 12 und Messeinrichtung 16 über nicht weiter bezeichnete Leitungen oder funkgestützt verbunden ist, steuert die Herstellung der Biegeteile und damit den Betrieb der Komponenten der Umformmaschine 2.

Wie Fig. 1 schematisch zeigt, umfasst die Biegestation 14 u.a. auch einem Biegewerkzeug 20, welcher das Drahtmaterial in den gewünschten zweidimensionalen oder dreidimensionalen Biegeprozessen zum Biegeteil umformt.

Die Schneideinrichtung 12 umfasst eine Drahtführung 22, durch welche der Draht 4 zur Biegestation 14 geführt wird. Die Drahtführung 22 stabilisiert den Draht 4, wenn ein Schneidmesser 24, das von einem Antrieb 26 angetrieben wird, den Draht 4 zur Einzugsrichtung 8 durchtrennt. Sie wirkt dadurch als Gegenmesser. Das biegewerkzeugseitige Ende der Drahtführung 22 legt damit die Stelle fest, an welcher der Draht 4 durchtrennt wird. Dabei ruhen Drahtführung 22 und Draht 4, so dass letzterer von der Einzugseinrichtung 6 in einer intermittierenden Bewegung transportiert wird. Während des Umformens wird der Draht 4 vorgeschoben, beim Durchtrennen ruht er.

Es ist aber gleichermaßen möglich, den bewegten Draht 4 zu durchtrennen. Dann bewegen sich Drahtführung 22 und Messer 24 entsprechend mit dem Draht 4. Soweit nachfolgend von Durchtrennen bei ruhendem Draht 4 ausgegangen wird, gelten die Ausführungen gleicherma-ßen für den Relativbezug auf den bewegten Draht 4 und dessen Durchtrennung.

Die Messeinrichtung 16 umfasst eine Kamera 28, welche in der Ausführungsform der Fig. 1-3 den Draht 4 am biegestationsseitigen Ende der Drahtführung 22 optisch abbildet. Die Kamera 28 verfügt dazu über ein Bildfeld, das sich, wie für Kameras üblich, längs einer optischen Blickachse 30 erstreckt. Diese ist im Wesentlichen senkrecht auf den Draht 4 gerichtet. Die Kamera 28 erfasst Reflexionseigenschaften des Drahtes 4, da zusätzlich eine Beleuchtungseinrichtung 32 vorgesehen ist, welche Beleuchtungsstrahlung auf die von der Kamera 28 erfasste Stelle richtet. Die Beleuchtungsstrahlung fällt dabei längs einer Beleuchtungsachse 34 ein, die in einem Winkel α zur Blickachse 30 steht. So sind die Reflexionsunterschiede zwischen abisolierten Abschnitten des Drahtes 4 und Abschnitten, in denen sich die Isolierung 38 noch auf dem metallischen Trägerköper 36 des Drahtes 4 (der ggf. verzinnt sein kann) befindet, besonders gut anhand der Reflexionseigenschaften, d.h. Rück-Reflexion und/oder Rück-Streuung erkennbar. Einflüsse von Störlicht etc. sind aufgrund der besonderen Beleuchtung nicht zu befürchten. Bei intermittierender Bewegung ist die Messeinrichtung 16 ortsfest. Beim Durchtrennen bei bewegtem Draht 4 bewegt sich die Messeinrichtung 16 entweder mit oder sie hat ein Messfeld, das den während des Durchtrennen auftretenden Vorschubweg abdeckt.

Bevorzugt liegt der Winkel α im Bereich um 45° (Variationen sind einbaubedingt möglich), und die beiden Achsen 30, 32 sowie der Draht 4 längs der Einzugsrichtung 8 liegen bevorzugt in einer Ebene.

Fig. 2 zeigt einen vergrößerten Ausschnitt des biegestationsseitigen Endes der Drahtführung 22 mit darin geführtem Draht 4. Fig. 2 zeigt dabei die ideale Vorschubstellung des Drahtes 4 zum Durchtrennen, die dann gegeben ist, wenn ein abisolierter Abschnitt 40 genau zur Hälfte aus der Drahtführung 22 ragt und das Messer 24 folglich den letzten abisolierten Abschnitt 40 genau in seiner Mitte oder einer anderen vorbestimmten Stelle durchtrennt.

In jedem abisolierten Abschnitt 40 ist die isolierende Ummantelung 38 vom Metalldraht 36 entfernt (aufgrund der Wirkung der Abisoliereinrichtung 10). Schiebt man in dem in Fig. 2 gezeigten Zustand das Messer 24 in Richtung des Pfeils 42 vor und durchtrennt den Draht an der Stirnfläche der Drahtführung 22, die dann als Gegenmesser wirkt, wird der abisolierte Abschnitt 40 genau in seiner Mitte oder einer anderen vorbestimmten Stelle durchtrennt. Um diesen, wie nachfolgend erläutert werden wird, idealen Abschneidevorgang einzustellen bzw. sicherzustellen, greift die Steuereinrichtung 18 auf die Messeinrichtung 16 zurück, von der in Fig. 2 nur die Achsen 30, 34 eingezeichnet sind. Es sei darauf hingewiesen, dass die Blickachse 30 wie die Beleuchtungsachse 34 natürlich nur die jeweilige optische Achse anzeigen, und dass das Blickfeld der Kamera 28 bzw. das Beleuchtungsfeld der Beleuchtungseinrichtung 32 tatsächlich größer ist, insbesondere den gesamten Teil des abisolierten Teil des Abschnittes 40 erfassen, der aus der Drahtführung 22 ragt.

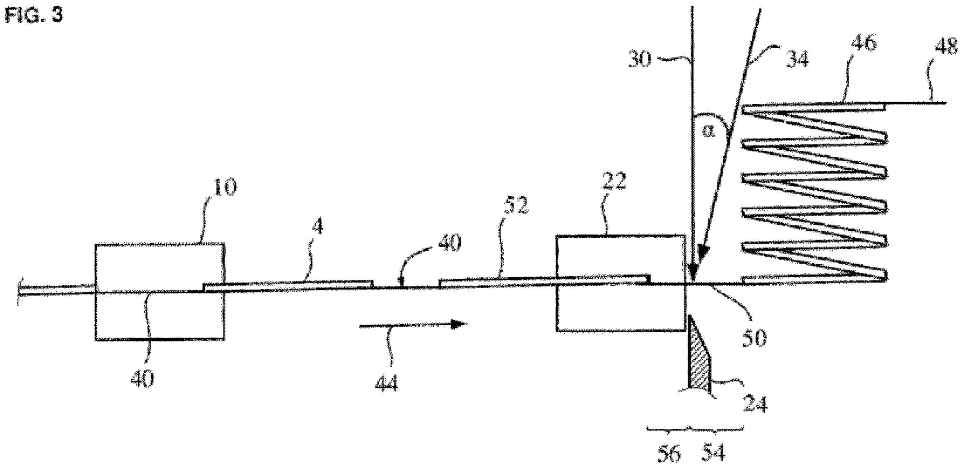

Fig. 2 zeigt schematisch den Draht 4 mit abisolierten Abschnitten 40, wie er nach dem Austritt aus der Abisoliereinrichtung 10 in Richtung des Pfeils 44 gefördert wird. Nach dem Durchlauf durch die Drahtführung 22 wird er vom (nicht gezeigten) Biegewerkzeug in ein exemplarisch spulenförmiges Biegeteil 46 umgeformt. Die dicker gezeichneten Abschnitte des Drahtes 4 sind Abschnitte, in denen die Isolierung vorhanden ist; die dünner gezeichneten Abschnitte sind die abisolierten Abschnitte 40. Wie zu sehen ist, hat das Biegeteil 46 Terminals 48, 50, an denen die Isolierung fehlt, die also aus einem abisolierten Abschnitt 40 stammen. Im Rest des Biegeteils 46 ist in der Regel die Isolierung vorhanden. Um dafür zu sorgen, dass die Terminals 48, 50 eine vorbestimmte Länge haben, steuert die (in Fig. 3 nicht gezeigte) Steuereinrichtung 18 die Abisoliereinrichtung 10 so an, dass die abisolierten Abschnitte 40 eine Länge haben, die genau der addierten Länge der Terminals 48, 50 entspricht. Weiter sorgt die Steuereinrichtung 18 dafür, dass das Schneidmesser 24 den letzten abisolierten Abschnitt 40, an dem das soeben geformte Biegeteil 46 noch mit dem restlichen Draht 4 verbunden ist, genau so durchtrennt, dass der abisolierte Abschnitt 40 z.B. halbiert wird, wie dies auch bereits in Fig. 2 schematisch angedeutet war. Konkret bedeutet dies, dass der aus der Drahtführung 22 ragende Teil 54 des letzten abisolierten Abschnittes 40 genauso lang ist, wie das Terminal 50, z.B. bei gleichlangen Terminals 48, 50, wie der noch in der Drahtführung 22 befindliche Teil 56. Dies wird durch die Messeinrichtung 16 überprüft, deren Signale von der Steuereinrichtung 18 entsprechend ausgewertet werden. Weiter stellt die Steuereinrichtung auch ggf. sicher, dass die Bewegung des Drahtes 4 in Richtung des Pfeils 44 so gestaltet wird, dass die gewünschten Verhältnisse, also die gewünschte Durchtrennung des letzten abisolierten Abschnittes 40 realisiert wird.

Hierzu gibt es je nach Ausgestaltung der Einzugseinrichtung 6, die in Fig. 3 der Übersichtlichkeit halber nicht eingezeichnet ist, mehrere Möglichkeiten. Bei einer Einzugseinrichtung, welche es erlaubt, die Drahtbewegung entgegen dem Pfeil 44 zu reversieren, überprüft die Steuereinrichtung 18 in einer Ausführungsform, ob der Teil 54 eine vorbestimmte Länge hat. Durch entsprechenden Antrieb der Einzugseinrichtung 6, die ggf. den Draht 4 wieder zurückzieht, also reversiert, wird die gewünschte Länge eingestellt, bevor das Messer 24 den Draht 4 im letzten abisolierten Abschnitt durchtrennt. Bei einer Einzugseinrichtung, die nicht reversieren kann, ist eine Ausführungsform zweckmäßig, in der die Steuereinrichtung 18 den regulären Vorschub des Drahtes 4 während des Biegeprozesses dann anhält, wenn eine maximale Länge des abisolierten Abschnitts 40 aus der Drahtführung 22 ausgetreten ist, wobei diese maximale Länge noch kleiner ist, als die Länge des gewünschten Teiles 54. Anschließend wird der Draht mit verminderter Geschwindigkeit ausgefahren, bis der gewünschte Abschnitt 54 mit gewünschter Länge aus der Drahtführung 22 ragt.

Gleiches gilt natürlich, falls das Biegewerkzeug 20 an der Bewegung des Drahtes 4 durch die Drahtführung 22 mitwirkt oder diese sogar bewirkt. Dann wird das Biegewerkzeug entsprechend angesteuert bzw. mitangesteuert.

In einer Ausführungsform bemisst die Steuereinrichtung 18 die Länge des Abschnittes 54 so, dass der in der Drahtführung 22 verbleibende Teil 56 eine bestimmte Länge hat. D.h. die Länge dieses Teils 56 ist als Regelgröße berücksichtigt. Dies kann zwar dazu führen, dass das zuletzt erzeugte Biegeteil 46 mitunter ein Terminal 50 hat, welches zu kurz ist (beispielsweise wenn es einen Versatz zwischen Biegeprozess und Lage der abisolierten Abschnitte 40 gab), doch ist dann auf jeden Fall sichergestellt, dass das nächste Biegeteil 46 ein Terminal 48 korrekter Länge hat, also kein Ausschuss sein wird. In einer alternativen Ausführungsform stellt die Steuereinrichtung 18 die Länge des aus der Drahtführung 22 ragenden Teils 54 ein, sorgt also für die gewünschte Länge des Terminals 50.

Für die Regelung ist es nicht nötig, dass der Draht 4 beim Messen ruht. Vielmehr kann die Kamera 28 auch fliegend Messen, um das Durchtrennen an gewünschter Stelle in jedem abisolierten Abschnitt 40 auszufügen. Das fliegende Messen kann mit einem Durchtrennen an ruhendem Draht 4 und mit Durchtrennen an bewegtem Draht 4 kombiniert sein.

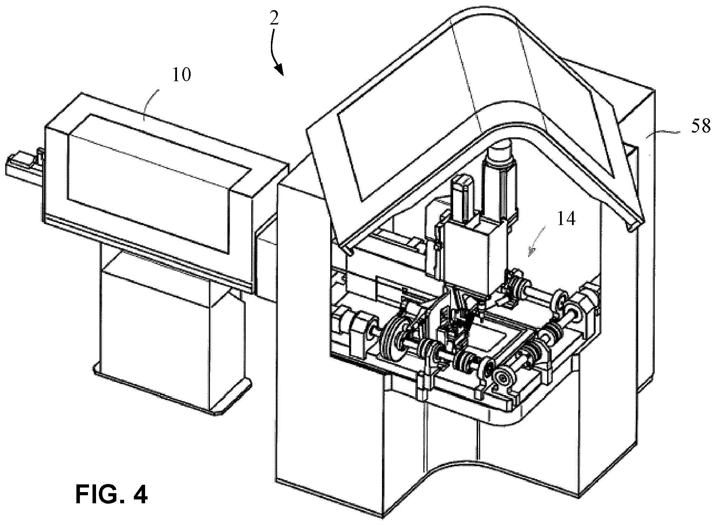

Fig. 4 zeigt die Umformmaschine 2 in einer perspektivischen Darstellung mit Abisolierstation 10 und einer Biegestation 14, die Teil einer Schenkelfederwickelmaschine 58 ist. Der Abisolierstation 10 können (nicht näher gezeigte) Richteinrichtungen vorgeordnet sein, welche dafür sorgen, dass der Draht 4 sich möglichst exakt der Einzugsrichtung erstreckt, ohne wellig etc. zu sein.

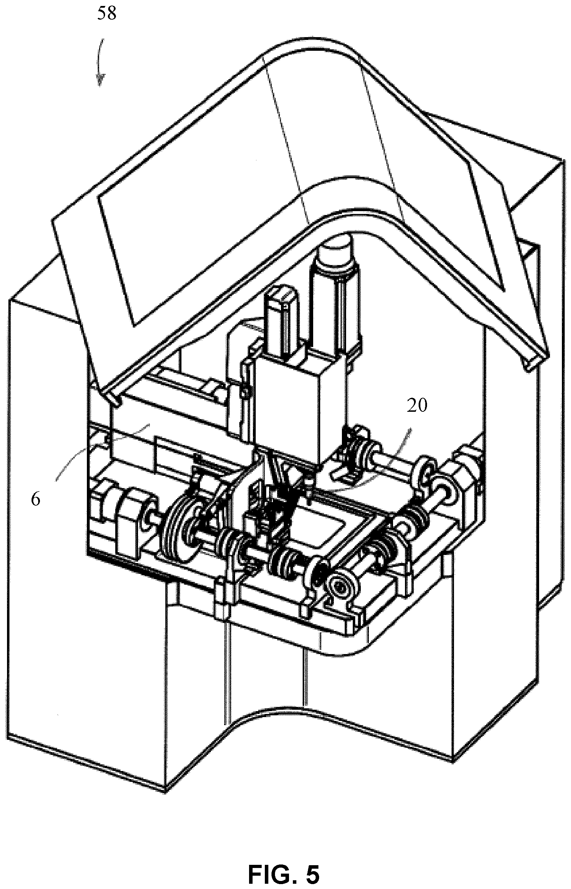

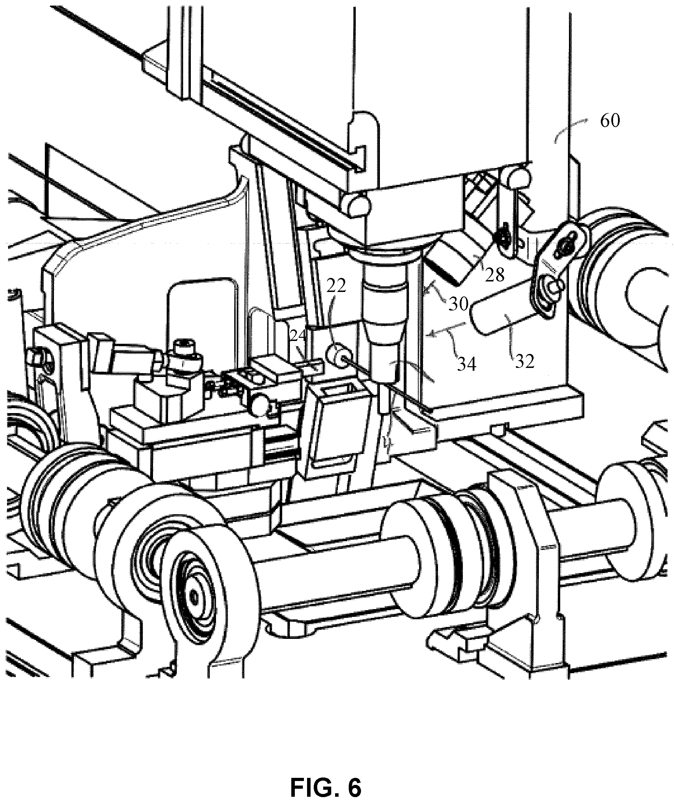

Fig. 5 zeigt die Schenkelfederwickelmaschine 58, allerdings noch ohne Draht und ohne Messeinrichtung. In Fig. 6 ist der Bereich um das Biegewerkzeug 20 näher gezeigt. Wie zu sehen ist, ragt der Draht 4 aus der Drahtführung 22, und die Kamera 28 blickt längs der optischen Blickachse 30 auf den aus der Drahtführung 22 ragenden Draht 4. Die Beleuchtungseinrichtung 32 beleuchtet schräg dazu längs der Beleuchtungsachse 34. Besonders gute Reflexionsverhältnisse sind dadurch realisiert, dass Draht 4, Beleuchtungsachse 32 und Blickachse 30 im Rahmen von Justiergenauigkeiten in einer Ebene liegen. Die Messeinrichtung 16 weist einen Halter 60 auf, der die Kamera 28 und die Beleuchtungseinrichtung 32 in der Schenkelfederwickelmaschine 58 hält. In Fig. 6 ist das Messer 24 in zurückgezogenem Zustand gezeigt. Zum Durchtrennen des Drahtes 4 wird es auf den Draht 4 vor und durch diesen durchgeschoben, so dass der Draht 4, am biegewerkzeugseitigen Ende der Drahtführung 22, welche als Gegenmesser fungiert, abgeschert wird.

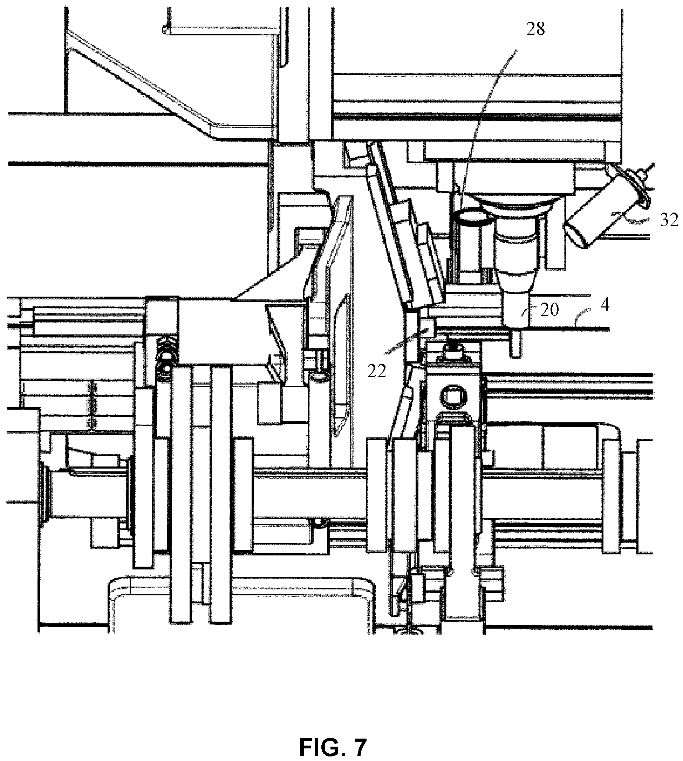

Fig. 7 zeigt eine Darstellung ähnlich der Fig. 6 mit annähernd senkrechter Blickrichtung auf den Draht 4. Gut zu erkennen ist hier, dass die Kamera 28 ebenfalls im Wesentlichen senkrecht auf den aus der Drahtführung 22 ausgetretenen Draht 4 blickt, und dass die Beleuchtungsrichtung 32 unter einem Winkel α von etwa 45° dazu beleuchtet. Es sei darauf hingewiesen, dass in den Darstellungen der Fig. 6 bis 8 der Draht 4 nicht vom Biegewerkzeug 20 umgeformt wurde. Dieser Prozess steht in der Darstellung der Fig. 6 bis 8 noch bevor und wurde der Einfachheit halber nicht gezeigt.

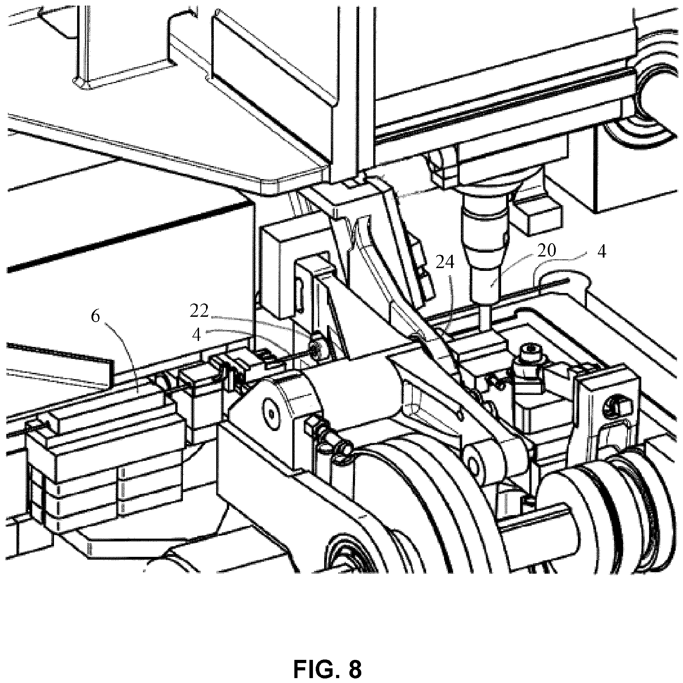

Fig. 8 zeigt das eintrittsseitige Ende der Drahtführung 22, um zu verdeutlichen, dass die Messeinrichtung 16 mit der Kamera 28 und der Beleuchtungseinrichtung 32 nicht zwingend, wie in Fig. 1 -3, am biegewerkzeugseitigen Ende der Drahtführung 22 auf den Draht 4 blicken muss. Es ist gleichermaßen möglich, die Lage der abisolierten Abschnitte 40 vor dem Eintritt in die Drahtführung 22 zu erfassen, beispielsweise wenn dies aus Bauraumgründen einfacher zu realisieren ist. Dies hat zudem den Vorteil, dass ein abisolierter Abschnitt 40 zur Gänze im Blickfeld der Kamera 28 liegen kann, was am austrittsseitigen Ende der Drahtführung 22 nicht möglich ist. Dies verbessert die Steuerung. Dadurch kann insbesondere fliegend gemessen werden - wiederum mit Durchtrennen an ruhendem Draht 4 oder mit Durchtrennen an bewegtem Draht 4.
1. Die Kamera 28 und Beleuchtung 30 sind auf einen Punkt vor der Drahtführung 22 eingestellt.
2. Der Messzeitpunkt (Triggersignal) wird von der Steuerung, abhängig vom Programmablauf immer so gelegt, dass sich der abisolierte Abschnitt 40 im Sichtfeld der Kamera 28 befindet.
3. Befindet sich das Ende der Abisolierung zu weit rechts oder links von der Sollposition, so kann während des restlichen Drahtvorschubes, in dem der gemessene Abschnitt 40 bis zur Schneideinrichtung 12 vorgeschoben wird, eine etwaige Korrektur ohne anzuhalten erfolgen.

Der Abstand der isolierten Abschnitte 40, auch als "Teilung" bezeichnet, hängt vom Betrieb der Abisoliereinrichtung 10 ab. Wenn diese im Durchlaufverfahren, also am bewegten Draht 4, arbeitet, kann sie den Draht 4 nur dann abisolieren, während dieser (z.B. bei der intermittierenden Bewegung) durch die Umformmaschine 2 bewegt wird. Beispielsweise ist dies während der Tätigkeit des Biegewerkzeugs 20 der Fall. Weiter gibt die Geometrie des Biegeteils 46 den Abstand zwischen den Terminals 48 und 50 und damit die Teilung vor, mit der die abisolierten Abschnitte 40 längs des Drahtes 4 ausgebildet werden müssen. Die gewünschte Länge der Terminals 48 und 50 legt die Länge der abisolierten Abschnitt 40 fest. Damit die abisolierten Abschnitte 40 im richtigen Abstand voneinander, also mit richtiger Teilung, und in richtiger Länge am Draht 4 ausgebildet werden, muss die Abisoliereinrichtung 10 in bestimmtem Abstand zum Ort des Drahtes 4 liegen, an dem das Schneidmesser 24 den Draht durchtrennen wird. Anderenfalls könnte die Abisoliereinrichtung 10 nicht arbeiten, während das Biegewerkzeug 20 den Draht 4 umformt. Konkret muss die Abisoliereinrichtung 10 um ein Vielfaches der durch Teilung und Länge der abisolierten Abschnitte 40 vorgegebenen Periode vom Ort, an dem das Schneidmesser den Draht 4 durchschneidet, angeordnet sein. Stimmt diese Anordnung nicht, kann sich regelmäßig einstellen, dass der Draht 4 vor dem Schneidprozess noch weiter vorgeschoben oder reversiert werden muss, um die gewünschte Länge des Teils 54 oder 56 (beide Teile können als Regelgröße dienen) sicherzustellen. Zeigt sich, dass wiederholt eine Justierung in ein und dieselbe Richtung (entweder Vorschub oder Reversieren) nötig ist, kann daraus abgeleitet werden, dass die Lage der Abisoliereinrichtung 10 längs des Drahtes 4 nicht optimal ist. Es ist deshalb in einer Weiterbildung eine zweistufige Regelung vorgesehen, bei der die Grundposition der Abisoliereinrichtung korrigiert wird, um einen dauerhaften Regeleingriff (Vorschub oder Reversieren) vor dem Schneidprozess auszuregeln. Der Begriff "Grundposition" bringt zum Ausdruck, dass es um die Bezugslage zum Biegewerkzeug geht und nicht um eine etwaige Verstellung, die während des Abisolierens auftreten kann.

Für das Regelkonzept ist weiter zu berücksichtigen, welche Einzugseinrichtung 6 vorhanden ist. Es kommen beispielsweise Schlitteneinzug, ein Walzeneinzug oder ein Zangeneinzug in Frage. Insbesondere bei Letzterem ist ein Reversieren, d.h. ein Zurückziehen des Drahtes 4 in die Drahtführung 22 nicht möglich. Hier wird das zuvor erläuterte Konzept zur Anwendung kommen, dass die Steuereinrichtung den Draht 4 in einer Grobeinstellung so positioniert, dass ein an und für sich zur kurzer Teil aus der Drahtführung 22 ragt und dann in einer Feineinstellung noch so vorschiebt, dass die gewünschte Länge des Teils 54 oder 56 gegeben ist. Bei "fliegender" Messung ist dies besonders einfach möglich. Es wird also dafür gesorgt, dass vor dem Abschneiden noch ein vorzuschiebender Restweg verbleibt, über den dann eine Feineinstellung vorgenommen wird.

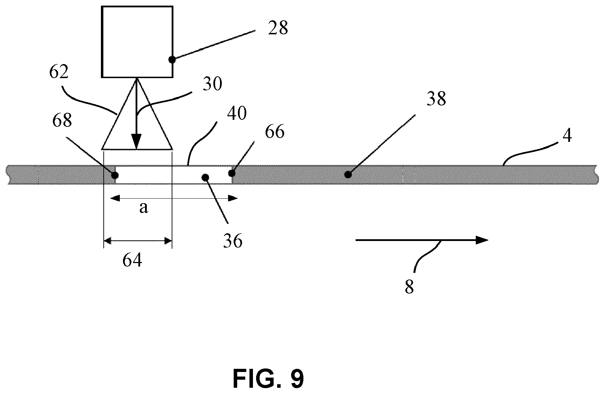

Fig. 9 zeigt eine mögliche Ausgestaltung für die Ausführungsform gemäß Fig. 8, bei der die Messeinrichtung in einem Bereich auf den Draht 4 blickt und diesen beleuchtet, bevor der Draht 4 in die Drahtführung 22 einläuft. Natürlich muss in diesem Bereich der Draht 4 für die Beleuchtungseinrichtung 32 und die Kamera 28 zugänglich sein.

Je nach Geometrie des Drahtes 4 ist es dabei zu bevorzugen, dass die Kamera 28 so ausgestaltet ist, dass sie nicht die gesamte Länge jedes abisolierten Abschnitts 40 erfasst. Insbesondere bei dünnen Drähten könnte dann das Problem auftreten, dass ein abisolierter Abschnitt 40 nur schwer zu erkennen ist - trotz der geschilderten gegenseitigen Ausrichtung von Blickachse 30 und Beleuchtungsachse 34. Es hat sich gezeigt, dass ein Verhältnis zwischen der Länge, welche die Kamera 28 am durchlaufenden Draht 4 erfasst, und dem Durchmesser des Drahtes von 10:1, besonderes bevorzugt 15:1 nicht überschritten werden sollte.

Insbesondere für solche Fälle ist die Ausführungsform der Fig. 9 vorteilhaft. Hier hat die Kamera 28 um ihre Blickrichtung 30 herum ein Bildfeld 62, das im Bereich des Drahtes 4 eine Ausdehnung 64 längs der Einzugsrichtung 8 hat. Diese Größe des Bildfeldes 62 ist kleiner als die Länge a der abisolierten Abschnitte 40. Die Kamera 28 kann damit den abisolierten Abschnitt 40 nicht zur Gänze erfassen. Die (in Fig. 9 nicht eingezeichnete) Steuereinrichtung 18 liest deshalb die Kamera 28 so aus, dass sie die Übergänge zwischen isoliertem und abisoliertem Material, d.h. Beginn und Ende des abisolierten Abschnitts 40, anhand der Reflexionseigenschaften erkennt. Bezogen auf die Einzugsrichtung 8, entlang der der Draht 4 bewegt wird, beginnt jeder abisolierte Abschnitt 40 mit einem Übergang erster Art 66, bei dem die Isolation 38 in den blanken Draht 36 wechselt. Jeder abisolierte Abschnitt 40 endet in einem Übergang zweiter Art 68, bei dem das blanke Drahtmaterial 36 wieder in die Isolierung 38 übergeht. Der Abstand zwischen den Übergängen erster 66 und zweiter 68 Art definiert die Länge a jedes abisolierten Bereichs 40. Der Abstand zwischen Übergängen zweiter Art 68 und erster Art 66 definiert den restlichen Teil der Periode, mit der die abisolierten Abschnitte 40 aufeinander folgen.

Zum Ermitteln der Länge a der abisolierten Abschnitte 40 und optional auch zum Ermitteln der genannten Periode, d.h. des Abstandes zwischen Übergängen erster Art 66 untereinander oder zwischen zweiten Übergängen 68 untereinander, liest die Steuereinrichtung 18 die Signale der Kamera 28 aus und erkennt die Übergänge 66 und 68. Zusammen mit dem Bewegungsverlauf des Drahtes 4, welcher der Steuereinrichtung 18 in der Regel bekannt ist, da sie den Einzug des Drahtes 4 steuert, ermittelt die Steuereinrichtung 18 damit die Länge a der abisolierten Abschnitte 40 und die Abstände der abisolierten Abschnitte 40 untereinander.

Um im Falle großer Einzugsgeschwindigkeiten das Auftreten der Übergänge 66 und 68 möglichst zeitexakt feststellen zu können, ist es bevorzugt, die Kamera 28 als Zeilenkamera auszugestalten.

Unabhängig davon kann die Länge a der abisolierten Abschnitte 40 dadurch ermittelt werden, dass die Zeitpunkte festgestellt werden, zu denen sich jeder Übergang 66 und 68 an einer bestimmten Stelle im Bild der Kamera 28 befindet bzw. an einem bestimmten Ort im Bild der Kamera 28 durchläuft. Alternativ ist es möglich, die Kamera 28 zu bestimmten Zeitpunkten auszulesen und die Lage des Übergangs 66, 68 im Bild der Kamera festzustellen. Ein Versatz gegenüber einer erwarteten Soll-Stelle zeigt dann unmittelbar eine Abweichung der Länge a an.

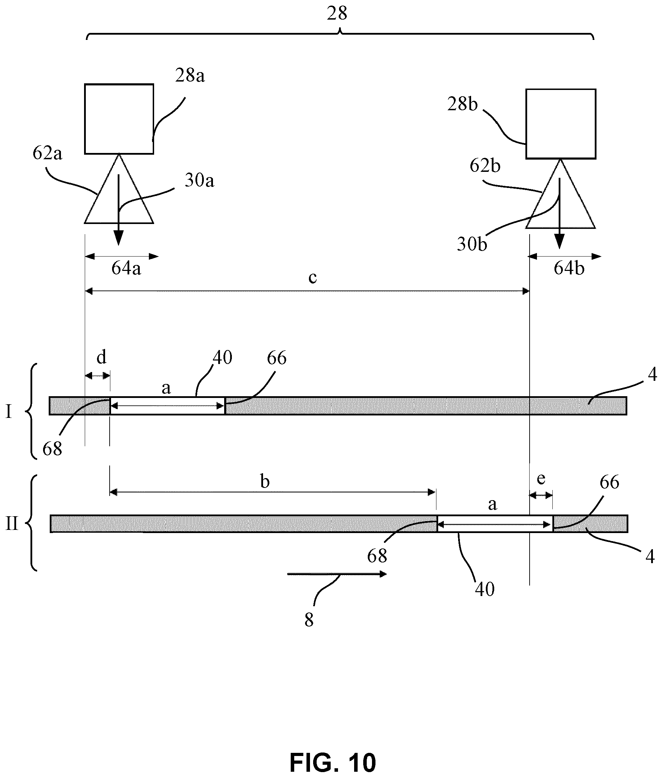

Fig. 10 zeigt eine Weiterbildung des in Fig. 8 und 9 verfolgten Prinzips, bei dem die Messeinrichtung die abisolierten Abschnitte 40 erfasst, bevor der Draht 4 zur Drahtführung 22 gelangt, d.h. in der Umformmaschine vor dem Ort, an dem der Draht 4 in den abisolierten Abschnitten 40 durchtrennt wird. Fig. 10 verwendet dieselben Bezugszeichen wie Fig. 9, soweit damit dieselben bzw. entsprechende Elemente bezeichnet werden.

Als Besonderheit wird in der Ausführungsform der Fig. 10 eine Kamera 28 verwendet, die zwei Kamerasubmodule 28a und 28b aufweist. Diese haben jeweils ein Bildfeld 62a und 62b von einer Größe 64a und 64b. Die Kamerasubmodule befinden sich in einem Abstand c voneinander. Dieser ist exemplarisch in Fig. 10 auf den linken Rand des Bildfelds 62a bzw. 62b bezogen. Gleichermaßen könnte er jedoch auch auf die Blickachsen 30a, 30b bezogen sein.

Wie in Fig. 9 ist auch in Fig. 10 die Beleuchtungseinrichtung zur Vereinfachung nicht eingezeichnet.

In der in Fig. 10 dargestellten Ausführungsform sind die Bildfelder 62a, 62b nicht so groß, dass ein gesamter abisolierter Abschnitt 40 erfasst werden könnte. Es wird deshalb das in Fig. 9 geschilderte Prinzip angewendet, wobei nun allerdings die erste Kamera 28a einen der Übergänge 66, 68 erfasst und die zweite Kamera 28b den anderen Übergang 68, 66. Mit anderen Worten, eine der Kameras erfasst den Beginn jedes abisolierten Abschnittes 40 (bezogen auf die Einzugsrichtung 8), die andere Kamera das Ende des abisolierten Abschnitts 40. In der Ausführungsform der Fig. 10 ist exemplarisch die erste Kamera 28a auf das Ende, d.h. den Übergang zweiter Art 68, gerichtet, die zweite Kamera 28b auf den Beginn, d.h. den Übergang erster Art 66. Dies kann natürlich invertiert werden. Selbstverständlich dürfen jedoch nicht beide Kameras den Übergang derselben Art erfassen.

Die Kameras 28a, 28b werden zu Triggerzeitpunkten ausgelesen. Mit I ist ein erster Triggerzeitpunkt bezeichnet und die entsprechende Lage des abisolierten Abschnittes 40 eingetragen. Zum Triggerzeitpunkt ermittelt die Steuereinrichtung 18 (in Fig. 10 nicht eingezeichnet) aus dem Bild der Kamera 28a einen Versatz d, der die Lage des Übergangs zweiter Art 68 angibt. Zu einem zweiten Triggerzeitpunkt II ist der Draht längs der Einzugsrichtung 8 weiterbewegt worden, und die zweite Kamera 28b ermittelt die Lage des Übergangs erster Art 66 in Form eines Versatzes e. Aus dem bekannten Abstand c und den Lagen d, e lässt sich die Länge a der abisolierten Abschnitte 40 ermitteln, da das dazu nötige Maß b, nämlich die Periode, mit welcher die abisolierten Abschnitte 40 aufeinander folgen, durch den zeitlichen Abstand der Triggerzeitpunkte I und II im Zusammenhang mit dem dadurch durchgeführten Bewegungsablauf in der Einzugsrichtung 8, der von der Steuereinrichtung 18 gesteuert wird, bekannt ist.

Bezeichnen die Lagen e und d die Abstände der Übergänge vom jeweiligen Bildrand, ergibt sich a = (c + e) - (d + b).

Eine Kalibrierung ist möglich, indem ein abisolierter Abschnitt 40 mit bekannter Länge a gemäß dem Einzugsbewegungsverlauf durchgeschoben wird. Auf diese Weise können Messfehler für die Lagen b, e und den Abstand c korrigiert werden.

Die Lagen e und d beziehen sich auf den Abstand zwischen dem Übergang 66 bzw. 68 und dem (in Fig. 10) linken Bildfeldrand der Kamera 28a bzw. 28b.

Das Verwenden der Triggerzeitpunkte I und II gibt eine große Freiheit bei der Wahl des Abstandes c. In der Praxis kann man die Kamerasubmodule 28a und 28b in der Umformmaschine montieren und wählt dann den ersten Triggerzeitpunkt I so, dass beim Bewegungsablauf des Einzugs, der von der Steuereinrichtung 18 gesteuert wird, der Übergang zweiter Art 68 im Bildfeld 62a des ersten Kamerasubmoduls 28a liegt. Gleichermaßen wird der zweie Triggerzeitpunkt II dann so gewählt, dass der Übergang erster Art 66 im Bildfeld 62b des zweiten Kamerasubmoduls 28b liegt. Das genaue Maß für den Abstand c kann dann, wie erwähnt, durch ein Kalibrierverfahren einfach ermittelt werden. In der Praxis kann es auch ausreichen, mit der Messeinrichtung lediglich darauf zu achten, dass die Lagen d, e auf eine feste Referenz bezogen werden. Daraus ergibt sich dann ebenfalls die Länge der abisolierten Abschnitte a. Verschieben sich die beiden Lagen in gleicher Weise, bleibt die Länge a des abisolierten Abschnitts 40 konstant. Verschiebt sich nur eine der Positionen, hat sich die Länge a um genau dieses Maß geändert. Man muss hierfür weder den Kameraabstand c noch die Periode b kennen. Gleichermaßen ist es als Alternative möglich, die beiden Lagen der Übergänge zu erfassen, ohne die abisolierte Länge tatsächlich zu kennen. Die Messeinrichtung zeigt dann eine Änderung der Länge a an, die sich durch die Änderung der Summe aus e + d ergibt.

In den Ausführungsformen, die die Übergänge erster und zweiter Art ermitteln, kann die Lage der Übergänge zu jeder beliebigen Referenzstelle im Bild der Kamera 28 bzw. der Kamerasubmodule 28a, 28b erfasst werden. Es muss nicht zwingend auf den Rand des Bildfeldes abgestellt werden.

Diese Ausgestaltung ist insbesondere vorteilhaft, wenn in der Praxis das Biegeteil zuerst ohne Berücksichtigung der Messeinrichtung eingerichtet wird. Dazu wird die Länge a der abisolierten Abschnitte 40 sowie deren Lage zu einem bestimmten Zeitpunkt bestimmt. Dann wird mittels der Kamera 28, insbesondere der Kamerasubmodule 28a, 28b die Übergänge erster 66 und zweiter 68 Art zu einem bestimmten Zeitpunkt überwacht. Damit wird indirekt auch die Länge a der abisolierten Abschnitte 40 überwacht.

## Patentansprüche

1. Umformmaschine zum Herstellen von Biegeteilen aus isoliertem länglichem Material (4) in Form von Draht- oder Flach-Material, bei dem ein elektrisch leitendes Metall (36) mit einer elektrisch isolierenden Isolationsschicht (38) ummantelt ist, wobei die Umformmaschine (2) aufweist:
- eine Einzugseinrichtung zum Zuführen des isolierten Materiales in einer Einzugsrichtung (8),
- eine Biegestation (14) mit einem Biegewerkzeug (20) zum Umformen des Materials zu einem Biegeteil (46),
- eine der Biegestation (14) in Einzugsrichtung (8) vorgeordnete Abisoliereinrichtung (10) zum Abisolieren von Abschnitten (40) des isolierten Materials,
- eine zwischen Abisoliereinrichtung (10) und Biegestation (14) angeordnete Schneideinrichtung (12) zum Durchtrennen des länglichen Materials (4) in den abisolierten Abschnitten (40) und Abtrennen des Biegeteiles (46) vom zugeführten Material, wobei die Schneideinrichtung (12) ein Schneidmesser (24) und eine Führungseinrichtung (22) aufweist, welche das längliche Material (4) quer zur Einzugsrichtung (8) stabilisiert, wenn das Schneidmesser (24) den abisolierten Abschnitt (40) durchtrennt, und
- eine Messeinrichtung (16) zur Ermittlung der Lage der abisolierten Abschnitte (40) des länglichen Materials (4), sowie
- eine mit der Messeinrichtung (16) verbundene Steuereinrichtung (18),
**dadurch gekennzeichnet, dass**
- die Messeinrichtung (16) eine Kamera (28) und eine Beleuchtungseinrichtung (32) aufweist, wobei eine optische Blickachse (30) der Kamera (28) im Wesentlichen rechtwinklig zur Einzugsrichtung (8) und eine optische Beleuchtungsachse (34) der Beleuchtungseinrichtung (32) schräg sowohl zur Einzugsrichtung (8) als auch zur optischen Blickachse (30) auf das längliche Material (4) gerichtet sind, so dass die Kamera (28) und/oder die Steuereinrichtung (18) die abisolierten Abschnitte (40) anhand deren Reflexionseigenschaften detektiert,
- wobei optional die optische Beleuchtungsachse (34) in einem Winkel von 20 bis 70 Grad, bevorzugt von 30 bis 60 Grad, besonders bevorzugt von 40 bis 50 Grad zur optischen Blickachse (30) und/oder zur Einzugsrichtung (8) steht.

2. Umformmaschine nach Anspruch 1, **dadurch gekennzeichnet, dass** die Umformmaschine so konfiguriert ist, dass die Kamera (28) einen der abisolierten Abschnitte (40) des länglichen Materials (4) erfasst, der vor dem Schneidvorgang aus der Führungseinrichtung ragt, wobei insbesondere der von der Kamera (28) erfasste abisolierte Abschnitt (40) am schneidmesserseitigen Ende aus der Führungseinrichtung ragt.

3. Umformmaschine nach einem der obigen Ansprüche, **dadurch gekennzeichnet, dass** die Umformmaschine so konfiguriert ist, dass die Steuereinrichtung (18) den Einzug des länglichen Materials (4) steuert und auf Basis von Signalen der Kamera (28) den Einzug so steuert, dass der beim Durchtrennen des abisolierten Abschnitts (40) am länglichen Material (4) oder am Biegeteil (46) verbleibende Teil des durchtrennten abisolierten Abschnitts (40) eine vorbestimmte Länge hat, wobei insbesondere die Steuereinrichtung (18), den Einzug des länglichen Materials (4) reversiert, um die vorbestimmte Länge des am länglichen Material (4) oder am Biegeteil (46) verbleibenden Teils einzustellen, und zudem insbesondere das Biegewerkzeug (20) das längliche Material (4) durch die Führungseinrichtung (22) einzieht und die Steuereinrichtung (18) das Biegewerkzeug (20) reversiert, um die vorbestimmte Länge des am länglichen Material (4) oder am Biegeteil (46) verbleibenden Teils einzustellen.

4. Umformmaschine nach einem der obigen Ansprüche, **dadurch gekennzeichnet, dass** die Umformmaschine so konfiguriert ist, dass die Kamera (28) das längliche Material (4) erfasst, bevor es in die Führungseinrichtung (22) einläuft und dass die Steuereinrichtung (18) Einzug und/oder Schneideinrichtung (12) unter Berücksichtigung eines Abstandes zwischen dem von der Kamera (28) detektierten Teil des länglichen Materials (4) und dem Ort der Schneideinrichtung (12) so ansteuert, dass die Schneideinrichtung (12) den abisolierten Abschnitt (40) des länglichen Materials (4) an vorbestimmter Stelle durchtrennt.

5. Umformmaschine nach einem der obigen Ansprüche, **dadurch gekennzeichnet, dass** die Abisoliereinrichtung (10) motorisch hinsichtlich einer Grundposition längs der Einzugsrichtung (8) verfahrbar und positionierbar ist und die Steuereinrichtung (18) so konfiguriert ist, dass sie mittels Einstellung der Grundposition der Abisoliereinrichtung (10) die Position am länglichen Material (4) regelt, an der die Schneideinrichtung (12) jeweils die abisolierten Abschnitte (40) durchtrennt.

6. Umformmaschine nach den Ansprüchen 3 und 5, **dadurch gekennzeichnet, dass** die Steuereinrichtung (18) so konfiguriert ist, dass sie mittels Steuerung des Einzugs und Einstellung der Grundposition der Abisoliereinrichtung (10) eine zweistufige Regelung ausführt.

7. Umformmaschine nach einem der obigen Ansprüche, **dadurch gekennzeichnet, dass** die Umformmaschine so konfiguriert ist, dass
- die Messeinrichtung (16) das längliche Material (4) erfasst, bevor es in die Führungseinrichtung (22) einläuft, wobei
- insbesondere die Kamera (28) vom länglichen Material (4) eine Länge (64) erfasst, die bevorzugt kleiner ist, als eine Soll-Länge jedes abisolierten Abschnitts (40), und die Steuereinrichtung (18) fortwährend Übergänge erster Art (66), nämlich von isoliertem zu abisoliertem Material, und Übergänge zweiter Art (68), nämlich von abisoliertem zu isoliertem Material, ermittelt, oder
- insbesondere die Steuereinrichtung (18) für die abisolierten Abschnitte (40) zu Triggerzeitpunkten (I, II) im Kamerabild jeweils eine Lage (e) eines Übergangs erster Art (66), nämlich von isoliertem zu abisoliertem Material, und eine Lage eines Übergangs zweiter Art (68), nämlich von abisoliertem zu isoliertem Material, ermittelt und aus den Lagen (e, d) der Übergänge (68, 66) im Kamerabild die Längen (a) der abisolierten Abschnitte (40) und/oder die Abstände (b) aufeinanderfolgender abisolierter Abschnitte (40) bestimmt und zudem optional
-- die Kamera (28) zwei Kamerasubmodule, nämlich ein erstes und ein zweites Kamerasubmodul (28a, 28b), aufweist, die längs der Einzugsrichtung (8) in einem Abstand (c) zueinander angeordnet sind und jeweils mit individuellen Bildfeldern (62a, 62b) an verschiedenen Stellen auf das längliche Material (4) gerichtet sind, wobei bevorzugt die individuellen Bildfelder (62a, 62b) vom länglichen Material (4) eine Länge (64) erfassen, die kleiner ist, als eine Soll-Länge jedes abisolierten Abschnitts (40), und
-- die Steuereinrichtung (18) für die abisolierten Abschnitte (40) jeweils zu einem ersten Triggerzeitpunkt (I) die Lage (d) des Übergangs zweiter Art (68) im vom ersten Kamerasubmodul (28a) gelieferten Bild und zu einem zweiten Triggerzeitpunkt (II) die Lage (e) des Übergangs erster Art (66) im vom zweiten Kamerasubmodul (28b) gelieferten Bild ermittelt und aus den Lagen (d, e) die Längen (a) der abisolierten Abschnitte (40) und/oder die Abstände (b) aufeinanderfolgender abisolierter Abschnitte (40) ermittelt.

8. Herstellverfahren für Biegeteile aus isoliertem länglichem Material (4) in Form von Draht- oder Flach-Material, bei dem ein elektrisch leitendes Metall (36) mit einer elektrisch isolierenden Isolationsschicht (38) ummantelt ist, umfassend die Schritte:
- Zuführen des isolierten Materiales in einer Einzugsrichtung (8),
- Umformen des Materials zu einem Biegeteil (46) mit einem Biegewerkzeug (20) in einer Biegestation (14),
- Abisolieren von Abschnitten (40) des isolierten Materials mit einer der Biegestation (14) in Einzugsrichtung (8) vorgeordneten Abisoliereinrichtung (10),
- Durchtrennen des länglichen Materials (4) in den abisolierten Abschnitten (40) und Abtrennen des Biegeteiles (46) vom zugeführten Material mit einer zwischen Abisoliereinrichtung (10) und Biegestation (14) angeordneten Schneideinrichtung (12), wobei die Schneideinrichtung (12) ein Schneidmesser (24) und eine Führungseinrichtung (22) aufweist, welche das längliche Material (4) quer zur Einzugsrichtung (8) stabilisiert, wenn das Schneidmesser (24) den abisolierten Abschnitt (40) durchtrennt, und
- Ermitteln der Lage der abisolierten Abschnitte (40) des länglichen Materials (4), **dadurch gekennzeichnet, dass**
- zum Ermitteln der Lage der abisolierten Abschnitte (40) das längliche Material (4) mit einer Beleuchtungseinrichtung (32) längs einer optischen Beleuchtungsachse (34) beleuchtet und mit einer Kamera (28) entlang einer optischen Blickachse (30) der Kamera (28) abgebildet wird, wobei die optische Blickachse (30) im Wesentlichen rechtwinklig zur Einzugsrichtung (8) und die optische Beleuchtungsachse (34) schräg sowohl zur Einzugsrichtung (8) als auch zur optischen Blickachse (30) auf das längliche Material (4) gerichtet wird, und die abisolierten Abschnitte (40) anhand deren Reflexionseigenschaften detektiert werden,
- wobei optional die optische Beleuchtungsachse (34) in einem Winkel von 20 bis 70 Grad, bevorzugt von 30 bis 60 Grad, besonders bevorzugt von 40 bis 50 Grad zur optischen Blickachse (30) und/oder zur Einzugsrichtung (8) steht.

9. Herstellverfahren nach Anspruch 8, **dadurch gekennzeichnet, dass** die Kamera (28) einen der abisolierten Abschnitte (40) des länglichen Materials (4) erfasst, der vor dem Durchtrennen aus der Führungseinrichtung ragt, wobei insbesondere der von der Kamera (28) erfasste abisolierte Abschnitt (40) am schneidmesserseitigen Ende aus der Führungseinrichtung ragt.

10. Herstellverfahren nach einem der Ansprüche 8 oder 9, **gekennzeichnet durch** Steuern des Zuführen des länglichen Materials (4) auf Basis von Signalen der Kamera (28) so, dass der beim Durchtrennen am länglichen Material (4) oder am Biegeteil (46) verbleibende Teil des abisolierten Abschnitts (40) eine vorbestimmte Länge hat, wobei insbesondere ein Einzug des länglichen Materials (4) reversiert wird, um die vorbestimmte Länge des am länglichen Material (4) oder am Biegeteil (46) verbleibenden Teils einzustellen, und zudem insbesondere das Biegewerkzeug (20) das längliche Material (4) durch die Führungseinrichtung (22) einzieht und das Biegewerkzeug (20) reversiert wird, um die vorbestimmte Länge des am länglichen Material (4) oder am Biegeteil (46) verbleibenden Teils einzustellen.

11. Herstellverfahren nach einem der Ansprüche 8 bis 10, **dadurch gekennzeichnet, dass** die Kamera (28) das längliche Material (4) erfasst, bevor es in die Führungseinrichtung (22) einläuft und dass das Zuführen und/oder das Durchtrennen unter Berücksichtigung eines Abstandes zwischen dem von der Kamera (28) detektierten Teil des länglichen Materials (4) und dem Ort der Schneideinrichtung (12) so gesteuert wird, dass die Schneideinrichtung (12) den abisolierten Abschnitt (40) des länglichen Materials (4) an vorbestimmter Stelle durchtrennt.

12. Herstellverfahren nach einem der Ansprüche 8 bis 11, **dadurch gekennzeichnet, dass** die Abisoliereinrichtung (10) motorisch hinsichtlich einer Grundposition längs der Einzugsrichtung (8) verfahren und positioniert wird und mittels Einstellen der Grundposition der Abisoliereinrichtung (10) eine Position am länglichen Material (4) geregelt wird, an der die Schneideinrichtung (12) jeweils die abisolierten Abschnitte (40) durchtrennt.

13. Herstellverfahren nach den Ansprüchen 10 und 12, **dadurch gekennzeichnet, dass** mittels Steuerung des Einzugs und Einstellen der Grundposition der Abisoliereinrichtung (10) eine zweistufige Regelung ausgeführt wird.

14. Herstellverfahren nach einem der Ansprüche 8 bis 13, **dadurch gekennzeichnet, dass**
- mit der Kamera (28) das längliche Material (4) erfasst wird, bevor es in die Führungseinrichtung (22) einläuft, wobei
- insbesondere mit der Kamera (28) vom länglichen Material (4) eine Länge (64) erfasst wird, die bevorzugt kleiner ist, als eine Soll-Länge jedes abisolierten Abschnitts (40), und fortwährend Übergänge erster Art (66), nämlich von isoliertem zu abisoliertem Material, und Übergänge zweiter Art (68), nämlich von abisoliertem zu isoliertem Material, ermittelt werden und zudem optional für die abisolierten Abschnitte (40) zu Triggerzeitpunkten (I, II) im Kamerabild jeweils eine Lage (e) eines Übergangs erster Art (66), nämlich von isoliertem zu abisoliertem Material, und eine Lage (d) eines Übergangs zweiter Art (68), nämlich von abisoliertem zu isoliertem Material, ermittelt werden und aus den Lagen (e, d) der Übergänge (68, 66) im Kamerabild die Längen (a) der abisolierten Abschnitte (40) und/oder die Abstände (b) aufeinanderfolgender abisolierter Abschnitte (40) bestimmt werden und zudem optional
-- für die Kamera (28) zwei Kamerasubmodule, nämlich ein erstes und ein zweites Kamerasubmodul (28a, 28b),längs der Einzugsrichtung (8) in einem Abstand (c) zueinander angeordnet werden, die jeweils mit individuellen Bildfeldern (62a, 62b) an verschiedenen Stellen auf das längliche Material (4) gerichtet sind, wobei bevorzugt die individuellen Bildfelder (62a, 62b) vom länglichen Material (4) eine Länge (64) erfassen, die kleiner ist, als eine Soll-Länge jedes abisolierten Abschnitts (40), und
-- für die abisolierten Abschnitte (40) jeweils zu einem ersten Triggerzeitpunkt (I) die Lage (d) des Übergangs zweiter Art (68) im von ersten Kamerasubmodul (28a) gelieferten Bild und zu einem zweiten Triggerzeitpunkt (II) die Lage (e) des Übergangs erster Art (66) im vom zweiten Kamerasubmodul (28b) gelieferten Bild ermittelt werden und aus den Lagen (d, e) die Längen (a) der abisolierten Abschnitte (40) und/oder die Abstände (b) aufeinanderfolgender abisolierter Abschnitte (40) ermittelt werden.

## Claims

1. Forming machine for producing bent parts from insulated elongate material (4) in the form of wire material or flat material, wherein an electrically conductive metal (36) is clad with an electrically insulating insulation layer (38), wherein the forming machine (2) comprises:
- an intake device for feeding the insulated material in an intake direction (8),
- a bending station (14) with a bending tool (20) for forming the material into a bent part (46),
- a stripping device (10), arranged upstream of the bending station (14) in the intake direction (8), for stripping sections (40) of the insulated material,
- a cutting device (12), arranged between the stripping device (10) and the bending station (14), for severing the elongate material (4) in the stripped sections (40) and separating the bent part (46) from the material that has been fed in, wherein the cutting device (12) comprises a cutter (24) and a guiding device (22), which stabilizes the elongate material (4) transversely to the intake direction (8) when the cutter (24) severs the stripped section (40), and
- a measurement device (16) for ascertaining the position of the stripped sections (40) of the elongate material (4), and
- a control device (18) connected to the measurement device (16),
**characterized in that**
- the measurement device (16) comprises a camera (28) and an illumination device (32), wherein an optical viewing axis (30) of the camera (28) is substantially at a right angle to the intake direction (8) and an optical illumination axis (34) of the illumination device (32) is directed onto the elongate material (4) obliquely both in relation to the intake direction (8) and in relation to the optical viewing axis (30) such that the camera (28) and/or the control device (18) detects the stripped sections (40) on the basis of their reflection properties,
- wherein the optical illumination axis (34) is optionally at an angle of 20 to 70 degrees, preferably 30 to 60 degrees, with particular preference 40 to 50 degrees, in relation to the optical viewing axis (30) and/or the intake direction (8).

2. Forming machine according to Claim 1, **characterized in that** the forming machine is configured such that the camera (28) captures one of the stripped sections (40) of the elongate material (4) which projects from the guiding device before the cutting process, wherein in particular the stripped section (40) captured by the camera (28) projects from the guiding device at the cutter-side end.

3. Forming machine according to either of the preceding claims, **characterized in that** the forming machine is configured such that the control device (18) controls the intake of the elongate material (4) and controls the intake on the basis of signals from the camera (28) such that the part of the severed stripped section (40) that remains on the elongate material (4) or on the bent part (46) after severing the stripped section (40) has a predetermined length, wherein in particular the control device (18) reverses the intake of the elongate material (4) in order to set the predetermined length of the part remaining on the elongate material (4) or on the bent part (46), and additionally in particular the bending tool (20) takes in the elongate material (4) through the guiding device (22) and the control device (18) reverses the bending tool (20) in order to set the predetermined length of the part remaining on the elongate material (4) or on the bent part (46).

4. Forming machine according to any of the preceding claims, **characterized in that** the forming machine is configured such that the camera (28) captures the elongate material (4) before it enters the guiding device (22) and **in that** the control device (18) controls the intake and/or cutting device (12) under consideration of a distance between the part of the elongate material (4) detected by the camera (28) and the location of the cutting device (12) in a manner such that the cutting device (12) severs the stripped section (40) of the elongate material (4) at a predetermined point.

5. Forming machine according to any of the preceding claims, **characterized in that** the stripping device (10) is displaceable and positionable by motor along the intake direction (8) with respect to a basic position, and the control device (18) is configured such that it controls, in a closed loop, the position at the elongate material (4) at which the cutting device (12) severs the respective stripped sections (40), by setting the basic position of the stripping device (10).

6. Forming machine according to Claims 3 and 5, **characterized in that** the control device (18) is configured such that it performs two-stage closed-loop control by controlling the intake and setting the basic position of the stripping device (10).

7. Forming machine according to any of the preceding claims, **characterized in that** the forming machine is configured such that
- the measurement device (16) captures the elongate material (4) before it enters the guiding device (22), wherein
- in particular the camera (28) captures a length (64) of the elongate material (4) that is preferably smaller than a target length of each stripped section (40), and the control device (18) continuously ascertains transitions of a first type (66), specifically from insulated to stripped material, and transitions of a second type (68), specifically from stripped to insulated material, or
- in particular the control device (18) ascertains for the stripped sections (40) at trigger times (I, II) in the camera image in each case a position (e) of a transition of the first type (66), specifically from insulated to stripped material, and a position of a transition of the second type (68), specifically from stripped to insulated material, and determines from the positions (e, d) of the transitions (68, 66) in the camera image the lengths (a) of the stripped sections (40) and/or the distances (b) between successive stripped sections (40) and additionally, optionally,
-- the camera (28) comprises two camera submodules, specifically a first and a second camera submodule (28a, 28b), which are arranged along the intake direction (8) at a distance (c) from each other and are each directed with individual image fields (62a, 62b) at different points onto the elongate material (4), wherein preferably the individual image fields (62a, 62b) capture a length (64) of the elongate material (4) that is smaller than a target length of each stripped section (40), and
-- the control device (18) ascertains for the stripped sections (40) in each case at a first trigger time (I) the position (d) of the transition of the second type (68) in the image provided by the first camera submodule (28a) and ascertains at a second trigger time (II) the position (e) of the transition of the first type (66) in the image provided by the second camera submodule (28b) and ascertains from the positions (d, e) the lengths (a) of the stripped sections (40) and/or the distances (b) between successive stripped sections (40).

8. Method for producing bent parts from insulated elongate material (4) in the form of wire material or flat material, wherein an electrically conductive metal (36) is clad with an electrically insulating insulation layer (38), comprising the steps of:
- feeding the insulated material in an intake direction (8),
- forming the material into a bent part (46) using a bending tool (20) in a bending station (14),
- stripping sections (40) of the insulated material using a stripping device (10) arranged upstream of the bending station (14) in the intake direction (8),
- severing the elongate material (4) in the stripped sections (40) and separating the bent part (46) from the material that has been fed in using a cutting device (12) arranged between the stripping device (10) and the bending station (14), wherein the cutting device (12) comprises a cutter (24) and a guiding device (22), which stabilizes the elongate material (4) transversely to the intake direction (8) when the cutter (24) severs the stripped section (40), and
- ascertaining the position of the stripped sections (40) of the elongate material (4),
**characterized in that**
- for ascertaining the position of the stripped sections (40), the elongate material (4) is illuminated with an illumination device (32) along an optical illumination axis (34) and is imaged using a camera (28) along an optical viewing axis (30) of the camera (28), wherein the optical viewing axis (30) is substantially at a right angle to the intake direction (8) and the optical illumination axis (34) is directed onto the elongate material (4) obliquely both with respect to the intake direction (8) and with respect to the optical viewing axis (30), and the stripped sections (40) are detected on the basis of their reflection properties,
- wherein the optical illumination axis (34) is optionally at an angle of 20 to 70 degrees, preferably 30 to 60 degrees, with particular preference 40 to 50 degrees, in relation to the optical viewing axis (30) and/or the intake direction (8).

9. Production method according to Claim 8, **characterized in that** the camera (28) captures one of the stripped sections (40) of the elongate material (4) which projects from the guiding device before the severing, wherein in particular the stripped section (40) captured by the camera (28) projects from the guiding device at the cutter-side end.

10. Production method according to either of Claims 8 and 9, **characterized by** controlling the feeding in of the elongate material (4) on the basis of signals from the camera (28) such that the part of the stripped section (40) that remains on the elongate material (4) or on the bent part (46) after severing has a predetermined length, wherein in particular an intake of the elongate material (4) is reversed in order to set the predetermined length of the part remaining on the elongate material (4) or on the bent part (46), and additionally in particular the bending tool (20) takes in the elongate material (4) through the guiding device (22) and the bending tool (20) is reversed in order to set the predetermined length of the part remaining on the elongate material (4) or on the bent part (46).

11. Production method according to any of Claims 8 to 10, **characterized in that** the camera (28) captures the elongate material (4) before it enters the guiding device (22) and **in that** the feeding and/or the severing is controlled under consideration of a distance between the part of the elongate material (4) that is detected by the camera (28) and the location of the cutting device (12) in a manner such that the cutting device (12) severs the stripped section (40) of the elongate material (4) at a predetermined point.

12. Production method according to any of Claims 8 to 11, **characterized in that** the stripping device (10) is displaced and positioned by motor along the intake direction (8) with respect to a basic position, and a position at the elongate material (4) at which the cutting device (12) severs the respective stripped sections (40) is controlled in a closed loop by setting the basic position of the stripping device (10).

13. Production method according to Claims 10 and 12, **characterized in that** two-stage closed-loop control is performed by controlling the intake and setting the basic position of the stripping device (10).

14. Production method according to any of Claims 8 to 13, **characterized in that**
- the elongate material (4) is captured using the camera (28) before it enters the guiding device (22), wherein
- in particular the camera (28) is used to capture a length (64) of the elongate material (4) that is preferably smaller than a target length of each stripped section (40), and transitions of a first type (66), specifically from insulated to stripped material, and transitions of a second type (68), specifically from stripped to insulated material, are continuously ascertained and additionally, optionally, for the stripped sections (40) at trigger times (I, II) in the camera image in each case a position (e) of a transition of the first type (66), specifically from insulated to stripped material, and a position (d) of a transition of the second type (68), specifically from stripped to insulated material, are ascertained and the lengths (a) of the stripped sections (40) and/or the distances (b) between successive stripped sections (40) are determined from the positions (e, d) of the transitions (68, 66) in the camera image and, additionally, optionally
-- for the camera (28), two camera submodules, specifically a first and a second camera submodule (28a, 28b), are arranged along the intake direction (8) at a distance (c) from each other and are each directed with individual image fields (62a, 62b) at different points onto the elongate material (4), wherein preferably the individual image fields (62a, 62b) capture a length (64) of the elongate material (4) that is smaller than a target length of each stripped section (40), and
-- for the stripped sections (40) in each case at a first trigger time (I) the position (d) of the transition of the second type (68) in the image provided by the first camera submodule (28a) and at a second trigger time (II) the position (e) of the transition of the first type (66) in the image provided by the second camera submodule (28b) are ascertained and the lengths (a) of the stripped sections (40) and/or the distances (b) between successive stripped sections (40) are ascertained from the positions (d, e).

## Revendications

1. Machine de formage destinée à produire des pièces pliées à partir d'un matériau allongé isolé (4) se présentant sous la forme d'un matériau filaire ou plat, dans laquelle un métal électriquement conducteur (36) est enrobé d'une couche d'isolation (38) électriquement isolante, la machine de formage (2) comportant :
- un dispositif d'alimentation destiné à amener le matériau isolé dans une direction d'alimentation (8),
- un poste de pliage (14) comprenant un outil de pliage (20) destiné à mettre en forme le matériau pour obtenir une pièce pliée (46),
- un dispositif de dénudage (10) situé en amont du poste de pliage (14) dans le sens d'alimentation (8) et destiné à dénuder des portions (40) du matériau isolé,
- un dispositif de coupe (12) disposé entre le dispositif de dénudage (10) et le poste de pliage (14) et destiné à découper le matériau allongé (4) en les portions dénudées (40) et séparer la pièce pliée (46) du matériau amené, le dispositif de coupe (12) comportant un couteau de coupe (24) et un dispositif de guidage (22) qui stabilise le matériau allongé (4) transversalement à la direction d'alimentation (8) lorsque le couteau de coupe (24) découpe la potion dénudée (40), et
- un dispositif de mesure (16) destiné à déterminer la position des portions dénudées (40) du matériau allongé (4), et
- un dispositif de commande (18) relié au dispositif de mesure (16),
**caractérisée en ce que**
- le dispositif de mesure (16) comporte une caméra (28) et un dispositif d'éclairage (32), un axe de visualisation optique (30) de la caméra (28) étant sensiblement perpendiculaire à la direction d'alimentation (8) et un axe d'éclairage optique (34) du dispositif d'éclairage (32) étant orienté obliquement aussi bien par rapport à la direction d'alimentation (8) que par rapport à l'axe de visualisation optique (30) sur le matériau allongé (4) de sorte que la caméra (28) et/ou le dispositif de commande (18) détecte(nt) les portions dénudées (40) sur la base de leurs propriétés de réflexion,
- éventuellement l'axe d'éclairage optique (34) formant un angle de 20 à 70 degrés, de préférence de 30 à 60 degrés, de manière particulièrement préférée de 40 à 50 degrés, par rapport à l'axe de visualisation optique (30) et/ou à la direction d'alimentation (8).

2. Machine de formage selon la revendication 1, **caractérisée en ce que** la machine de formage est conçue de telle sorte que la caméra (28) capture l'une des portions dénudées (40) du matériau allongé (4) qui fait saillie du dispositif de guidage avant le processus de coupe, en particulier la portion dénudée (40) détectée par la caméra (28) faisant saillie du dispositif de guidage à l'extrémité située du côté du couteau de coupe.

3. Machine de formage selon l'une des revendications ci-dessus, **caractérisée en ce que** la machine de formage est conçue de telle sorte que le dispositif de commande (18) commande l'alimentation du matériau allongé (4) et commande l'alimentation sur la base de signaux de la caméra (28) de sorte que la partie de la portion dénudée découpée (40), laquelle partie reste sur le matériau allongé (4) ou sur la pièce pliée (46) lorsque la portion dénudée (40) est découpée, présente une longueur prédéterminée, en outre notamment le dispositif de commande (18) inversant l'alimentation du matériau allongé (4) afin de régler la longueur prédéterminée de la partie qui reste sur le matériau allongé (4) ou sur la pièce pliée (46) et en particulier l'outil de pliage (20) alimentant le dispositif de guidage (22) en le matériau allongé (4) et le dispositif de commande (18) inversant l'outil de pliage (20) afin de régler la longueur prédéterminée de la partie qui reste sur le matériau allongé (4) ou sur la pièce pliée (46).

4. Machine de formage selon l'une des revendications précédentes, **caractérisée en ce que** la machine de formage est conçue de telle sorte que la caméra (28) capture le matériau allongé (4) avant qu'il ne pénètre dans le dispositif de guidage (22) et **en ce que** le dispositif de commande (18) commande l'alimentation et/ou le dispositif de coupe (12) en tenant compte d'une distance entre la partie du matériau allongé (4) qui est détectée par la caméra (28) et l'emplacement du dispositif de coupe (12) de sorte que le dispositif de coupe (12) découpe la portion dénudée (40) du matériau allongé (4) en un point prédéterminé.

5. Machine de formage selon l'une des revendications précédentes, **caractérisée en ce que** le dispositif de dénudage (10) peut être déplacé et positionné par moteur par rapport à une position de base le long de la direction d'alimentation (8) et le dispositif de commande (18) est conçu pour réguler la position sur le matériau allongé (4), à laquelle le dispositif de coupe (12) découpe les portions dénudées (40), en réglant la position de base du dispositif de dénudage (10).

6. Machine de formage selon les revendications 3 et 5, **caractérisée en ce que** le dispositif de commande (18) est conçu pour effectuer une régulation en deux étapes en commandant l'alimentation et le réglage de la position de base du dispositif de dénudage (10).

7. Machine de formage selon l'une des revendications précédentes, **caractérisée en ce que** la machine de formage est conçue de telle sorte que
- le dispositif de mesure (16) détecte le matériau allongé (4) avant qu'il ne pénètre dans le dispositif de guidage (22),
- en particulier, la caméra (28) détectant une longueur (64) du matériau allongé (4) qui est de préférence inférieure à une longueur cible de chaque portion dénudée (40), et le dispositif de commande (18) déterminant en continu des transitions de premier type (66), à savoir du matériau isolé au matériau dénudé, et des transitions de deuxième type (68), à savoir du matériau dénudé au matériau isolé, ou
- en particulier, le dispositif de commande (18) déterminant, pour les portions dénudées (40) à des instants de déclenchement (I, II) dans l'image de la caméra, à chaque fois une position (e) d'une transition de premier type (66), à savoir de matériau isolé à matériau dénudé, et une position d'une transition de deuxième type (68), à savoir de matériau dénudé à matériau isolé, et déterminant les longueurs (a) des portions dénudées (40) et/ou les distances (b) entre des portions isolées (40) successives à partir des positions (e, d) des transitions (68, 66) dans l'image de caméra et en outre éventuellement
-- la caméra (28) comportant deux sous-modules de caméra, à savoir un premier et un deuxième sous-module de caméra (28a, 28b), qui sont disposés à une distance (c) l'un de l'autre le long de la direction d'alimentation (8) et qui sont orientés chacun avec des champs d'image individuels (62a, 62b) sur le matériau allongé (4) en différents points, de préférence les champs d'image individuels (62a, 62b) capturant une longueur (64) du matériau allongé (4) qui est inférieure à une longueur cible de chaque portion dénudée (40), et
-- le dispositif de commande (18) déterminant pour chacune des portions dénudées (40) la position (d) de la transition de deuxième type (68) dans l'image fournie par le premier sous-module de caméra (28a) à un premier instant de déclenchement (I) et, à un deuxième instant de déclenchement (II), la position (e) de la transition de premier type (66) dans l'image fournie par le deuxième sous-module de caméra (28b) et déterminant à partir des positions (d, e) les longueurs (a) des portions dénudées (40) et/ou les distances (b) entre les portions dénudées successives (40).

8. Procédé de production de pièces pliées en matériau allongé isolé (4) se présentant sous la forme de matériau filaire ou plat, procédé dans lequel un métal électriquement conducteur (36) est recouvert d'une couche d'isolation (38) électriquement isolante, ledit procédé comprenant les étapes suivantes :
- amener le matériau isolé dans une direction d'alimentation (8),
- mettre en forme le matériau afin d'obtenir une pièce pliée (46) à l'aide d'un outil de pliage (20) dans un poste de pliage (14),
- dénuder des portions (40) du matériau isolé à l'aide d'un dispositif de dénudage (10) disposé en amont du poste de pliage (14) dans la direction d'alimentation (8),
- découper le matériau allongé (4) dans les portions dénudées (40) et séparer la pièce pliée (46) du matériau amené à l'aide d'un dispositif de coupe (12) disposé entre le dispositif de dénudage (10) et le poste de pliage (14), le dispositif de coupe (12) comportant un couteau de coupe (24) et un dispositif de guidage (22) qui stabilise le matériau allongé (4) transversalement à la direction d'alimentation (8) lorsque le couteau de coupe (24) découpe la portion dénudée (40), et
- déterminer la position des portions dénudées (40) du matériau allongé (4),
**caractérisé en ce que**
- pour déterminer la position des portions dénudées (40), le matériau allongé (4) est éclairé le long d'un axe d'éclairage optique (34) à l'aide d'un dispositif d'éclairage (32) et est reproduit à l'aide d'une caméra (28) le long d'un axe de visualisation optique (30) de la caméra (28), l'axe de visualisation optique (30) étant orienté sensiblement perpendiculairement à la direction d'alimentation (8) et l'axe d'éclairage optique (34) étant orienté sur le matériau allongé (4) obliquement aussi bien par rapport à la direction d'alimentation (8) que par rapport à l'axe de visualisation optique (30), et les portions dénudées (40) étant détectées sur la base de leurs propriétés de réflexion,
- éventuellement l'axe d'éclairage optique (34) formant un angle de 20 à 70 degrés, de préférence de 30 à 60 degrés, de manière particulièrement préférée de 40 à 50 degrés, par rapport à l'axe de visualisation optique (30) et/ou à la direction d'alimentation (8).

9. Procédé de production selon la revendication 8, **caractérisé en ce que** la caméra (28) détecte l'une des portions dénudées (40) du matériau allongé (4) qui fait saillie du dispositif de guidage avant d'être découpée, en particulier la portion dénudée (40) qui est détectée par la caméra (28) faisant saillie du dispositif de guidage à l'extrémité située du côté du couteau de coupe.

10. Procédé de production selon l'une des revendications 8 ou 9, **caractérisé par** la commande de l'alimentation du matériau allongé (4) sur la base de signaux de la caméra (28) de sorte que la partie de la portion dénudée (40), laquelle partie reste sur le matériau allongé (4) ou sur la pièce pliée (46) lors de la découpe, présente une longueur prédéterminée, en particulier une alimentation du matériau allongé (4) étant inversée afin de régler la longueur prédéterminée de la partie qui reste sur le matériau allongé (4) ou sur la pièce pliée (46), et en outre notamment l'outil de pliage (20) alimentant le dispositif de guidage (22) en le matériau allongé (4) et l'outil de pliage (20) étant inversé afin de régler la longueur prédéterminée de la partie qui reste sur le matériau allongé (4) ou sur la pièce pliée (46).

11. Procédé de production selon l'une des revendications 8 à 10, **caractérisé en ce que** la caméra (28) capture le matériau allongé (4) avant qu'il ne pénètre dans le dispositif de guidage (22) et **en ce que** l'alimentation et/ou la découpe sont commandées en tenant compte d'une distance entre la partie du matériau allongé (4) qui est détectée par la caméra (28) et l'emplacement du dispositif de coupe (12) de telle sorte que le dispositif de coupe (12) découpe la portion dénudée (40) du matériau allongé (4) à un emplacement prédéterminé.

12. Procédé de production selon l'une des revendications 8 à 11, **caractérisé en ce que** le dispositif de dénudage (10) est déplacé et positionné par un moteur par rapport à une position de base le long de la direction d'alimentation (8) et la position sur le matériau allongé (4), à laquelle le dispositif de coupe (12) découpe les portions dénudées (40), est régulée par réglage de la position de base du dispositif de dénudage (10).

13. Procédé de production selon l'une des revendications 10 à 12, **caractérisé en ce qu'**une régulation en deux étapes est effectuée par commande de l'alimentation et par réglage de la position de base du dispositif de dénudage (10).

14. Procédé de production selon l'une des revendications 8 à 13, **caractérisé en ce que**
- le matériau allongé (4) est capturé à l'aide de la caméra (28) avant de pénétrer dans le dispositif de guidage (22),
- en particulier, à l'aide de la caméra (28), une longueur (64) du matériau allongé (4) est détectée, qui est de préférence inférieure à une longueur cible de chaque portion dénudée (40), et des transitions de premier type (66), à savoir du matériau isolé au matériau dénudé, et des transitions de deuxième type (68), à savoir du matériau dénudé au matériau isolé, sont déterminées en continu et en outre éventuellement une position (e) d'une transition de premier type (66), à savoir du matériau isolé au matériau dénudé, et une position (d) d'une transition de deuxième type (68), à savoir du matériau dénudé au matériau isolé, sont déterminées pour chacune des portions dénudées (40) à des instants de déclenchement (I, II) dans l'image de la caméra et les longueurs (a) des portions dénudées (40) et/ou les distances (b) entre des portions dénudées successives (40) sont déterminées à partir des positions (e, d) des transitions (68, 66) dans l'image de la caméra et en outre éventuellement
-- pour la caméra (28) deux sous-modules de caméra, à savoir un premier et un deuxième sous-module de caméra (28a, 28b), sont disposés à une distance (c) l'un de l'autre le long de la direction d'alimentation (8) et sont orientés chacun avec des champs d'image individuels (62a, 62b) sur le matériau allongé (4) en différents points, de préférence les champs d'image individuels (62a, 62b) capturant une longueur (64) du matériau allongé (4) qui est inférieure à une longueur cible de chaque portion dénudée (40), et
-- pour chacune des portions dénudées (40), la position (d) de la transition de deuxième type (68) dans l'image fournie par le premier sous-module de caméra (28a) étant déterminée à un premier instant de déclenchement (I) et la position (e) de la transition de premier type (66) dans l'image fournie par le deuxième sous-module de caméra (28b) étant déterminée à un deuxième instant de déclenchement (II) et les longueurs (a) des portions dénudées (40) et/ou les distances (b) entre les portions dénudées successives (40) étant déterminées à partir des positions (d, e).
